(19)

**Europäisches Patentamt**

**European Patent Office**

**Office européen des brevets**

(11) **EP 4 588 873 A1**

(12) **EUROPEAN PATENT APPLICATION**

(43) Date of publication:
23.07.2025 Bulletin 2025/30

(21) Application number: 24223695.8

(22) Date of filing: 30.12.2024

(51) International Patent Classification (IPC):
**B65H 63/032** (2006.01) **B65H 63/04** (2006.01)
**D01D 5/096** (2006.01) **G06T 7/00** (2017.01)

(52) Cooperative Patent Classification (CPC):
**G06T 7/0004; B65H 63/0324; B65H 63/04;**
**D01D 5/096;** B65H 2701/31; B65H 2701/38;
G06T 2207/20081; G06T 2207/20084;
G06T 2207/30124

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 18.01.2024 JP 2024005869

(71) Applicant: **TMT Machinery, Inc.**
**Osaka-shi, Osaka 541-0041 (JP)**

(72) Inventors:
• **Matsuda, Ryo**
**Kyoto-shi, Kyoto, 612-8686 (JP)**
• **Yoshida, Kazuto**
**Kyoto-shi, Kyoto, 612-8686 (JP)**

(74) Representative: **Grünecker Patent- und**
**Rechtsanwälte**
**PartG mbB**
**Leopoldstraße 4**
**80802 München (DE)**

(54) **FILAMENT ABNORMALITY DETECTION DEVICE AND ABNORMALITY DETECTION PROGRAM**

(57)      Provided is a technique for detecting a yarn path abnormality regarding a filament with respect to a guide (11). A filament abnormality detection device detects an abnormality with respect to a spinning take-up device (1) configured to take up a plurality of filaments spun from a spinning device. The spinning take-up device (1) includes a guide (11) for guiding the plurality of filaments fed from upstream to downstream and bringing them closer to each other. The filament abnormality detection device includes a control device (101). The control device (101) executes: processing for acquiring, from a camera (30) arranged so that a shooting range thereof at least includes the plurality of filaments passing through the guide (11), a filament image for estimation in which a plurality of filaments appear; processing for determining whether or not a yarn path abnormality has occurred, based on an estimation model (124) subjected to machine learning so as to detect a yarn path abnormality in which at least one of the plurality of filaments is out of the guide (11), and the filament image for estimation; and processing for outputting a determination result of the processing for determining.

FIG.5

Processed by Luminess, 75001 PARIS (FR)

EP 4 588 873 A1

**Description**

TECHNICAL FIELD

The present disclosure relates to a filament abnormality detection device and an abnormality detection program.

BACKGROUND ART

Japanese Patent Application Laid-Open No. 2023-128942 discloses "a detection system capable of accurately detecting yarn sway of a filamentous structure in a spinning process in yarn production".

The detection system causes an image capture unit to perform image capture of a filamentous structure extruded from spinnerets and obtains multiple input images of the filamentous structure. Then, the detection system calculates the degree of variation of tone values with respect to pixels at the same position between the multiple input images, and detects yarn sway of the filamentous structure based on the degree of variation.

Japanese Patent Application Laid-Open No. 2023-128942 is an example of related art.

SUMMARY OF THE INVENTION

A spinning take-up device takes up a plurality of filaments spun from a spinning device and twists the plurality of filaments together to produce a yarn. The plurality of filaments are brought closer to each other by a guide in the process of being fed through the spinning take-up device. At this time, at least one of the plurality of filaments may deviate from the guide. Whether or not such a yarn path abnormality has occurred is often checked visually by an operator. However, filaments are very fine and visual checking is very difficult.

In view of the foregoing problem, there is demand for a technique for detecting a yarn path abnormality regarding a filament with respect to a guide.

Note that the detection system disclosed in Japanese Patent Application Laid-Open No. 2023-128942 aims to detect yarn sway of a filamentous structure and does not aim to detect a yarn path abnormality regarding a filament with respect to a guide.

An example of the present disclosure provides a filament abnormality detection device capable of detecting an abnormality with respect to a spinning take-up device configured to take up a plurality of filaments spun from a spinning device. The spinning take-up device includes a guide for guiding the plurality of filaments fed from upstream to downstream and bringing them closer to each other. The filament abnormality detection device includes a control device. The control device is configured to execute: processing for acquiring, from a camera arranged so that a shooting range of the camera at least includes the plurality of filaments passing through the guide, a filament image for estimation in which the plurality of filaments appear; processing for determining whether or not a yarn path abnormality has occurred, based on an estimation model subjected to machine learning so as to detect a yarn path abnormality in which at least one of the plurality of filaments is out of the guide, and the filament image for estimation; and processing for outputting a determination result of the processing for determining..

In the filament abnormality detection device, an estimation model subjected to machine learning so as to detect a yarn path abnormality in which a filament is out of the guide is used. The filament abnormality detection device can detect a yarn path abnormality by inputting a filament image for estimation to the estimation model.

In an example of the present disclosure, the estimation model is an autoencoder subjected to machine learning so as to compress a normal filament image in which no yarn path abnormality has occurred and then restore the filament image. In the processing for determining, whether or not a yarn path abnormality has occurred is determined based on a degree of similarity between the filament image for estimation and a restored filament image obtained by inputting the filament image for estimation to the autoencoder.

In the filament abnormality detection device, an autoencoder generated from a normal filament image is used. That is to say, in machine learning, no abnormal filament image is required.

In an example of the present disclosure, in the processing for determining, whether or not a yarn path abnormality has occurred is determined based on a result of comparison between the degree of similarity and a predetermined threshold.

With this, the filament abnormality detection device can detect a yarn path abnormality based on the threshold.

In an example of the present disclosure, the estimation model is generated by machine learning using multiple pieces of training data. In each of the multiple pieces of training data, a label indicating whether or not the yarn path abnormality has occurred is associated with a filament image for training in which a plurality of filaments passing through the guide appear. In the processing for determining, whether or not the yarn path abnormality has occurred is determined based on an output result obtained from the estimation model in response to input of the filament image for estimation to the estimation model.

In the filament abnormality detection device, an estimation model is used that was trained using an abnormal filament image in which a yarn path abnormality has occurred. As a result, the accuracy in detection of yarn path abnormalities is improved.

In an example of the present disclosure, the processing for determining includes: processing for performing preprocessing on the filament image for estimation; and processing for inputting the preprocessed filament image for estimation to the estimation model. The preprocessing includes processing for extracting an edge from the filament image for estimation.

With this, the filament abnormality detection device can capture filaments appearing in the filament image for estimation more accurately. As a result, the accuracy in detection of yarn path abnormalities is improved.

In an example of the present disclosure, the spinning take-up device further includes a light source arranged so that an illumination range of the light source at least includes the plurality of filaments passing upstream of the guide.

This makes the luminance difference between the filament and the background clear, and the filament abnormality detection device can capture filaments appearing in the filament image for estimation more accurately. As a result, the accuracy in detection of yarn path abnormalities is improved.

In an example of the present disclosure, the guide includes: a body having a surface with which the plurality of filaments fed from the spinning device in a direction of gravity come into contact; a discharge opening formed in the surface and configured to discharge oil solution; and two yarn guide members provided on the surface at locations on both sides of the discharge opening in a horizontal direction, and configured to guide the plurality of filaments fed in the direction of gravity toward a center of the discharge opening in the horizontal direction. The camera is arranged so that a shooting range of the camera at least includes the plurality of filaments passing upstream of the surface. The light source is arranged so that an illumination range of the light source at least includes the plurality of filaments passing upstream of the surface.

With this, the filament abnormality detection device can detect a yarn path abnormality in the guide having the oil supply function. As a result of the shooting range of the camera including the area upstream of the surface and the illumination range of the light source including the area upstream of the surface, the filament abnormality detection device can capture a yarn path abnormality regarding a filament more reliably. As a result, the accuracy in detection of yarn path abnormalities is improved.

In an example of the present disclosure, an optical axis of the light source is inclined with respect to an optical axis of the camera.

This reduces the amount of light reflected off the camera. As a result, overexposure in a filament image can be prevented.

In an example of the present disclosure, the light source is provided in front of the guide in a direction in which the guide is viewed from the camera.

As a result, the amount of light directly entering the camera from the light source is reduced. As a result, overexposure in a filament image can be prevented.

In an example of the present disclosure, the spinning take-up device further includes an anti-reflection member configured to prevent reflection of light emitted from the light source. The anti-reflection member is provided behind the guide in a direction in which the guide is viewed from the camera.

This further reduces the amount of light reflected off the camera. As a result, overexposure in a filament image can be prevented more reliably.

In an example of the present disclosure, the anti-reflection member is black.

This further reduces the amount of light reflected off the camera. As a result, overexposure in the filament image can be prevented more reliably.

In an example of the present disclosure, the light source is a spotlight. An illumination range of the spotlight intersects with an optical axis of the camera.

This can prevent objects other than the filaments from being illuminated with light. Therefore, the amount of light reflected off the camera can be further reduced. As a result, overexposure in a filament image can be prevented more reliably.

Another example of the present disclosure provides an abnormality detection program capable of detecting an abnormality with respect to a spinning take-up device configured to take up a plurality of filaments spun from a spinning device. The spinning take-up device includes a guide for guiding the plurality of filaments and bringing them closer to each other. The abnormality detection program causes a filament abnormality detection device to execute: a step of acquiring, from a camera arranged so that a shooting range of the camera at least includes the plurality of filaments passing through the guide, a filament image for estimation in which the plurality of filaments appear; a step of inputting the filament image for estimation to an estimation model subjected to machine learning so as to estimate a yarn path abnormality in which at least one of the plurality of filaments is out of the guide; a step of determining whether or not the yarn path abnormality has occurred, based on an output result of the estimation model; and a step of outputting a determination result in the step of determining.

In the abnormality detection program, an estimation model subjected to machine learning so as to detect a yarn path abnormality in which a filament is out of the guide is used. The abnormality detection program can detect a yarn path abnormality by inputting a filament image for estimation to the estimation model.

In an example of the present disclosure, the estimation model is an autoencoder subjected to machine learning so as to compress a normal filament image in which no yarn path abnormality has occurred and then restore the filament image. In the step of determining, whether or not the yarn path abnormality has occurred is determined based on a degree of similarity between the filament image for estimation and the restored filament image obtained by inputting the filament image for estimation to the autoencoder.

In the abnormality detection program, an autoencoder generated from the normal filament image is used. That is to say, in machine learning, no abnormal filament image is required.

In an example of the present disclosure, the step of determining includes: a step of performing preprocessing on the filament image for estimation; and a step of inputting the preprocessed filament image for estimation to the estimation model. The preprocessing includes processing for extracting an edge from the filament image for estimation.

With this, the filament abnormality detection device can capture filaments appearing in the filament image for estimation more accurately. As a result, the accuracy in detection of yarn path abnormalities is improved.

The above and other objects, features, aspects and advantages of the present invention will become apparent from the following detailed description of the invention as understood in connection with the accompanying drawings.

BRIEF DESCRIPTION OF THE DRAWINGS

FIG. 1 is a schematic view showing an example of a device configuration of a spinning take-up device.
FIG. 2 is a diagram showing an oil supply guide from the front.
FIG. 3 is a cross-sectional view taken along a line III-III shown in FIG. 2.
FIG. 4(A) and 4(B) show a yarn path abnormality regarding a filament.
FIG. 5 is a diagram showing a main configuration for realizing the function of detecting a yarn path abnormality.
FIG. 6 is a diagram showing an example of a hardware configuration of an information processing device.
FIG. 7 is a diagram showing an example of a training dataset.
FIG. 8 is a diagram showing an example of a functional configuration of the information processing device.
FIG. 9 illustrates an example of preprocessing performed by a preprocessing unit.
FIG. 10 illustrates another example of preprocessing performed by the preprocessing unit.
FIG. 11 illustrates an example of training processing performed by a training unit.
FIG. 12 illustrates an example of determination processing performed by a determination unit.
FIG. 13 illustrates an example of a layout pattern of a camera and a light source.
FIG. 14 illustrates another example of the layout pattern of the camera and the light source.
FIG. 15 illustrates yet another example of the layout pattern of the camera and the light source.
FIG. 16 is a flowchart showing a flow of training processing.
FIG. 17 is a flowchart showing a flow of abnormality detection processing.
FIG. 18 is a diagram showing an example of a device configuration of an information processing system.
FIG. 19 is a diagram showing a training dataset according to a modification.
FIG. 20 illustrates an example of training processing according to the modification.
FIG. 21 illustrates an example of determination processing according to the modification.

EMBODIMENTS OF THE INVENTION

Hereinafter, embodiments according to the present invention will be described with reference to the drawings. In the following description, identical components and constituent elements are denoted by identical reference numerals. Their names and functions are also the same. Accordingly, detailed description thereof will not be repeated. Note that the embodiments and modified examples described hereinafter may be selectively combined as appropriate.

A. Spinning take-up device 1

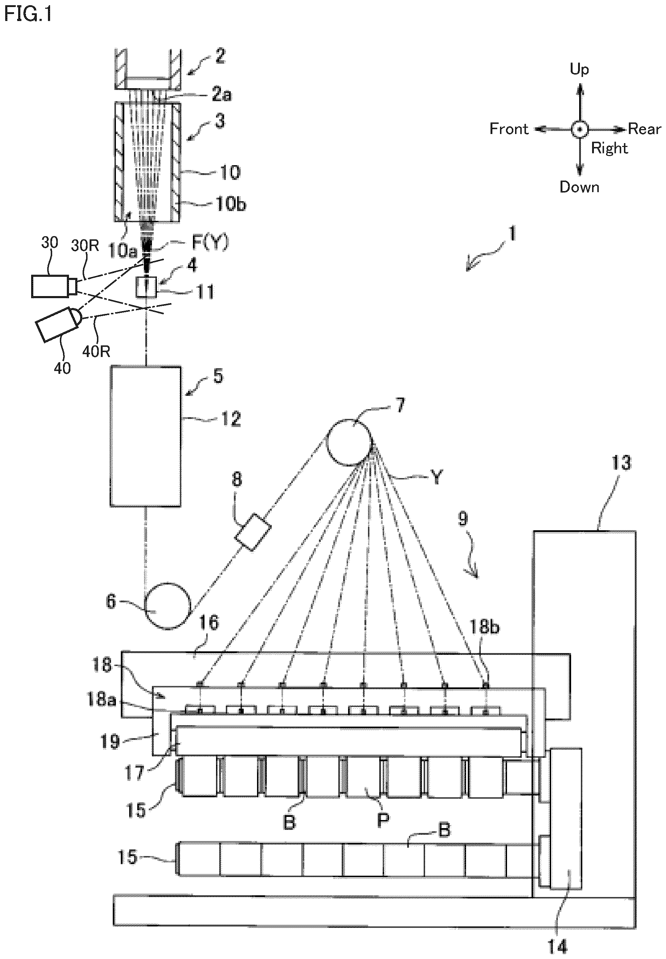

First, a spinning take-up device 1, which is a device for producing drawn yarn, will be described with reference to FIG. 1. FIG. 1 is a schematic view showing an example of a device configuration of the spinning take-up device 1.

As shown in FIG. 1, the spinning take-up device 1 takes up synthetic fiber yarn Y consisting of a plurality of filaments F spun from a spinning device 2 and winds the synthetic fiber yarn Y onto a plurality of bobbins B to form a plurality of packages P. Note that the following description is made with the up-down direction, the front-rear direction, and the left-right direction shown in FIG. 1 defined as the up-down direction of the spinning take-up device 1, the front-rear direction of the spinning take-up device 1, and the left-right direction of the spinning take-up device 1, respectively.

Also, the following description is made with the direction in which a plurality of filaments F are fed in the spinning take-up device 1 defined as the downstream side, and the direction opposite to the direction in which a plurality of filaments F are fed in the spinning take-up device 1 defined as the upstream side.

The spinning take-up device 1 includes a cooling part 3, an oil supply part 4, a stretching part 5, take-up rollers 6 and 7, an interlace device 8, a wind-up device 9, and the like. First, in the spinning device 2, polymer supplied from a polymer feeder (not shown) consisting of a gear pump or the like is extruded downward from a plurality of spinnerets 2a aligned in the left-right direction (paper depth direction in FIG. 1), and groups of filaments F are spun while being aligned in the left-right direction.

Then, the groups of filaments F are fed to the cooling part 3 and the oil supply part 4. In the oil supply part 4, each group of filaments F is put together into a single yarn Y Then, the plurality of yarns Y travel on the yarn path along the stretching part 5, the take-up roller 6, the interlace device 8, and the take-up roller 7 while being aligned in the left-right direction. Furthermore, the plurality of yarns Y are distributed in the front-rear direction from the take-up roller 7, and then are respectively wound onto the plurality of bobbins B in the wind-up device 9.

The cooling part 3 has a plurality of cylindrical cooling tubes 10, respectively located below a plurality of spinnerets 2a provided on the spinning device 2. The plurality of filaments F spun from each spinneret 2a of the spinning device 2 travel in an inner space 10a of the corresponding cooling tube 10 from above to below along the axial direction of the cooling tube 10. A rectification part 10b is provided around the inner space 10a, and cooling air supplied from a not-shown pressure air supply unit flows into the inner space 10a while being rectified by the rectification part 10b. Mainly, the rectification part 10b rectifies the cooling air flowing into the inner space 10a so that the flow rate of the cooling air is substantially uniform in the circumferential direction of the cooling tube 10.

The oil supply part 4 has a plurality of oil supply guides 11 respectively located below the cooling tubes 10. Each oil supply guide 11 puts together a plurality of filaments F spun from the corresponding spinneret 2a into a single yarn Y, and supplies oil solution to the yarn Y (plurality of filaments F). The oil supply guides 11 will be described in detail later.

Also, a camera 30 is provided inside the spinning take-up device 1. The camera 30 is arranged so that its shooting range 30R at least includes a plurality of filaments F passing upstream of the oil supply guide 11. In other words, the camera 30 may be arranged so that the shooting range 30R includes the oil supply guide 11 or may be arranged so that the shooting range 30R does not include the oil supply guide 11.

A light source 40 is also provided inside the spinning take-up device 1. The light source 40 is arranged so that its illumination range 40R at least includes a plurality of filaments F passing upstream of the oil supply guide 11. In other words, the light source 40 may be arranged so that the illumination range 40R includes the oil supply guide 11 or may be arranged so that the illumination range 40R does not include the oil supply guide 11. The illumination range 40R overlaps the shooting range 30R at least partially.

The stretching part 5 is located below the oil supply part 4. The stretching part 5 includes a warming box 12 and a plurality of heating rollers (not shown) housed in the warming box 12. The stretching part 5 stretches a plurality of yarns Y while heating them using the plurality of heating rollers.

The plurality of yarns Y stretched by the stretching part 5 are fed to the wind-up device 9 by the take-up rollers 6 and 7. The interlace device 8 is disposed between the take-up roller 6 and the take-up roller 7 to interlace the plurality of filaments F constituting a single yarn Y so that they are interlaced with each other.

The wind-up device 9 is provided with a machine table 13, a turret 14, two bobbin holders 15, a support frame 16, a contact roller 17, a traverse device 18, and the like. By rotating the bobbin holders 15, the wind-up device 9 winds a plurality of yarns Y fed from the take-up roller 7 onto the plurality of bobbins B at the same time to form a plurality of packages P.

The turret 14 is a circular disk-shaped member and is attached to the machine table 13. The turret 14 is driven to rotate by a not-shown motor. The two bobbin holders 15 are supported by the turret 14 in a cantilever fashion while extending in the front-rear direction. Each bobbin holder 15 is provided with a plurality of cylindrical bobbins B aligned in the axial direction of the bobbin holder 15. In response to the rotation of the turret 14, the two bobbin holders 15 can be switched between an upper winding position and a lower retracted position.

The support frame 16 is an elongated frame-shaped member extending in the front-rear direction. This support frame 16 is fixed to the machine table 13. In a lower portion of the support frame 16, a roller support member 19 elongated in the front-rear direction is attached to the support frame 16 so as to be movable up and down. The contact roller 17 extending in the axial direction of the bobbin holders 15 is rotatably supported on the roller support member 19. The contact roller 17 comes into contact with the package P that is in the process of being formed, and a predetermined contact pressure is applied to the package P, so that the shape of the package P is adjusted.

The traverse device 18 includes a plurality of traverse guides 18a aligned in the front-rear direction. The plurality of traverse guides 18a are driven by a not-shown motor and reciprocate in the front-rear direction. As a result of the traverse guide 18a reciprocating with the yarn Y hung, the yarn Y is wound onto the corresponding bobbin B while being caused to traverse in the front-rear direction about a fulcrum guide 18b.

B. Oil Supply Guide 11

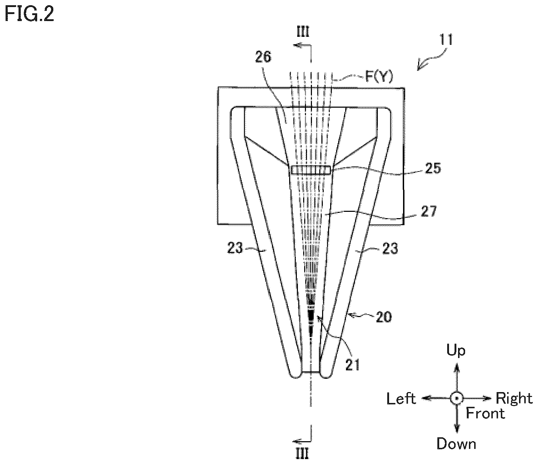

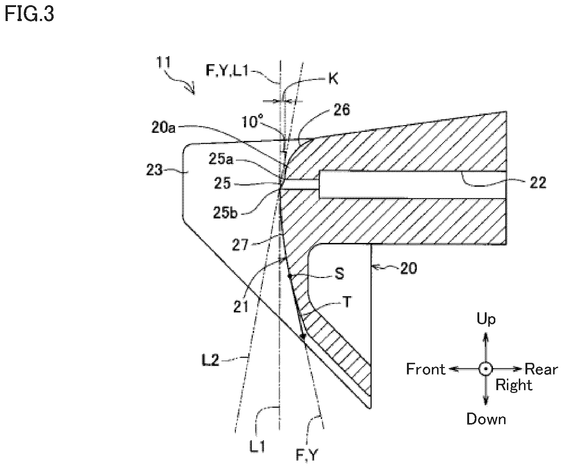

Next, the oil supply guide 11 shown in FIG. 1 will be described with reference to FIGS. 2 and 3. FIG. 2 is a diagram showing the oil supply guide 11 from the front. FIG. 3 is a cross-sectional view taken along a line III-III shown in FIG. 2.

As described above, the oil supply guide 11 provides oil solution to a yarn Y consisting of multiple filaments F spun from the spinning device 2. The oil supply guide 11 is made of a ceramic material such as alumina and zirconia and includes a guide body 20 as shown in FIGS. 2 and 3. The guide body 20 has a front surface 21 extending in the up-down direction. The yarn Y (the plurality of filaments F) fed from the cooling part 3 and moving from above to below (i.e., in the direction of gravity) comes into contact with the surface 21. The above-described camera 30 is arranged so that its shooting range 30R includes the plurality of filaments F passing upstream with respect to the surface 21. Also, the above-described light source 40 is arranged so that its illumination range 40R includes the plurality of filaments F passing upstream with respect to the surface 21.

The guide body 20 also includes an oil solution flow channel 22. The oil solution flow channel 22 is formed inside the oil supply guide 11 and extends in the front-rear direction. The front end of the oil solution flow channel 22 serves as a discharge opening 25 formed in the surface 21, and oil solution is discharged from the discharge opening 25 to be supplied to the yarn Y (the plurality of filaments F). The concentration of the oil solution discharged from the discharge opening 25 is, for example, about 85%. The concentration of the oil solution refers to the concentration that includes all the active ingredients, such as oil and additives, other than water.

Here, the surface 21 of the guide body 20 has an upper curved surface 26 located above an upper end 25a of the discharge opening 25 and a lower curved surface 27 located below a lower end 25b of the discharge opening 25. Both the curved surfaces 26 and 27 are curved so as to be convex toward the outside of the guide body 20.

Also, when viewed in the left-right direction (in the cross-sectional view of FIG. 3), the upper end 25a of the discharge opening 25 and an upper portion 20a of the guide body 20 located above the upper end 25a of the discharge opening 25 do not overlap with a tangent line L1 of the lower curved surface 27 at the position of the lower end 25b of the discharge opening 25. Furthermore, when viewed in the left-right direction, the upper end 25a of the discharge opening 25 and the upper portion 20a of the guide body 20 do not overlap with a straight line L2, which is obtained by rotating the tangent line L1 about the lower end 25b of the discharge opening 25 by 10 degrees in a clockwise direction (of approaching the upper end 25a of the discharge opening 25) in FIG. 3 .

A length K between the upper end 25a and the lower end 25b of the discharge opening 25 is about 0.1 [mm] in a direction perpendicular to the tangent line L1, for example, and thus the upper end 25a and the lower end 25b of the discharge opening 25 are in a positional relationship as described above.

When viewed in the left-right direction, the oil supply guide 11 is arranged so that the tangent line L1 is substantially parallel to the running direction of the yarn Y (filaments F) fed from the cooling part 3.

The oil supply guide 11 is configured to guide a plurality of filaments F fed from upstream to downstream to bring them closer to each other. More specifically, two yarn guide members 23 are disposed on the surface 21 of the guide body 20. The two yarn guide members 23 are respectively disposed on the surface 21 at positions to the right and left of the discharge opening 25. In other words, the two yarn guide members 23 are disposed on the surface 21 so as to be located on both sides of the discharge opening 25 in the left-right direction. Also, the two yarn guide members 23 extend while being inclined with respect to the up-down direction in a manner such that they approach the center of the discharge opening 25 in the left-right direction while extending from above to below. As a result, the distance between the two yarn guide members 23 in the left-right direction decreases while the yarn guide members 23 extend from above to below. The plurality of filaments F fed from the cooling part 3 are guided, while passing through the oil supply guide 11, by the two yarn guide members 23 in the direction in which they approach the center of the discharge opening 25 in the left-right direction, and are gradually converged together to form a single yarn Y

C. Overview

As described above, the plurality of filaments F come close to each other by the oil supply guide 11 in the process of being fed through the spinning take-up device 1. At this time, at least one of the plurality of filaments F may deviate from the oil supply guide 11. In the following, a situation in which at least one of the plurality of filaments F is out of the normal yarn path on the oil supply guide 11 is referred to also as "yarn path abnormality".

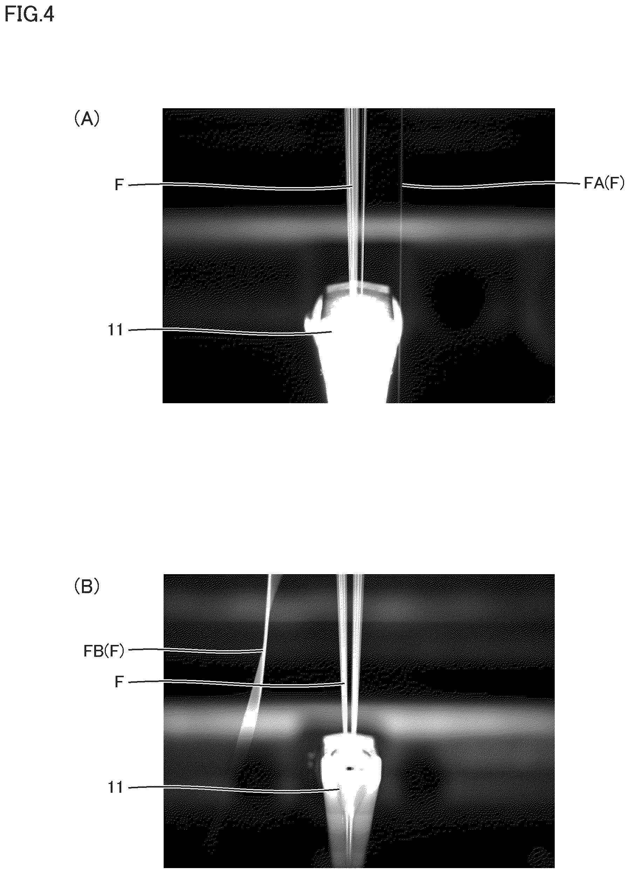

FIG. 4(A) and 4(B) illustrate specific examples of a yarn path abnormality regarding a filament F. In the example of FIG. 4(A), a filament FA is out of the yarn guide member 23 of the oil supply guide 11. In the example of FIG. 4(B), a filament FB is broken due to some reason and is out of the yarn guide member 23 of the oil supply guide 11. As another example, there is a yarn path abnormality in which a filament is out of the oil supply guide through which the filament should actually pass, and mistakenly enters an adjacent oil supply guide.

If a yarn path abnormality as described above occurs, the quality of the manufactured yarn Y will deteriorate. Whether or not a yarn path abnormality has occurred is often visually checked by the operator. However, filaments F are very fine and visually checking is very difficult. Therefore, the inventors have devised a function of automatically detecting a yarn path abnormality regarding a filament F.

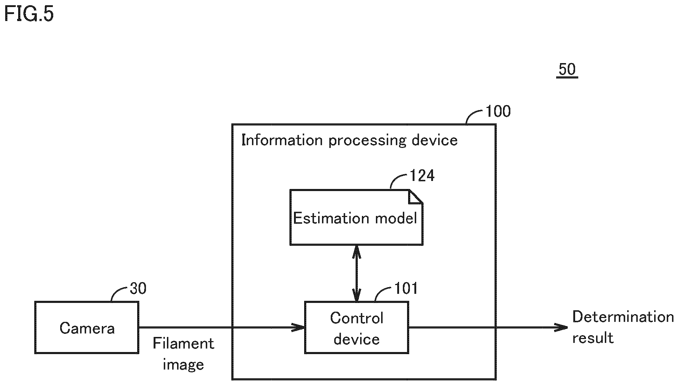

The following will describe overview of the function of detecting a yarn path abnormality with reference to FIG. 5. FIG. 5 is a diagram showing main configurations of a filament abnormality detection device 50 according to an embodiment.

As shown in FIG. 5, the filament abnormality detection device 50 includes the above-described camera 30 and an information processing device 100. The camera 30 of the filament abnormality detection device 50 is arranged inside the spinning take-up device 1 so that the shooting range of the camera 30 at least includes a plurality of filaments F passing the oil supply guide 11 of the spinning take-up device 1. The function of detecting a yarn path abnormality is implemented in, for example, the information processing device 100. The information processing device 100 is configured to be able to communicate with the spinning take-up device 1. The information processing device 100 may be arranged inside the spinning take-up device 1 or may be arranged outside the spinning take-up device 1.

The information processing device 100 is, for example, a control unit of the spinning take-up device 1. The control unit controls various types of drive devices (such as, e.g., the wind-up device 9) included in the spinning take-up device 1. As another example, the information processing device 100 may be a server configured to be able to communicate with the spinning take-up device 1.

The information processing device 100 includes a control device 101. The control device 101 is constituted by, for example, at least one integrated circuit. The integrated circuit may be constituted by, for example, at least one CPU (Central Processing Unit), at least one GPU (Graphics Processing Unit), at least one ASIC (Application Specific Integrated Circuit), at least one FPGA (Field Programmable Gate Array), or a combination thereof.

First, by giving an image capture instruction to the camera 30, the control device 101 acquires an image of a plurality of filaments F (hereinafter, referred to also as "filament image"). Also, the control device 101 acquires an estimation model 124. The estimation model 124 was subjected to machine learning so as to be able to detect a yarn path abnormality. Training processing for generating the estimation model 124 will be described later. Then, the control device 101 determines whether or not a yarn path abnormality has occurred based on the estimation model 124 and the filament image for estimation acquired from the camera 30, and outputs the result of the determination.

As described above, the information processing device 100 can detect a yarn path abnormality by using the estimation model 124 subjected to machine learning so as to detect a yarn path abnormality in which a filament F is out of the oil supply guide 11.

D. Hardware Configuration of Information Processing Device 100

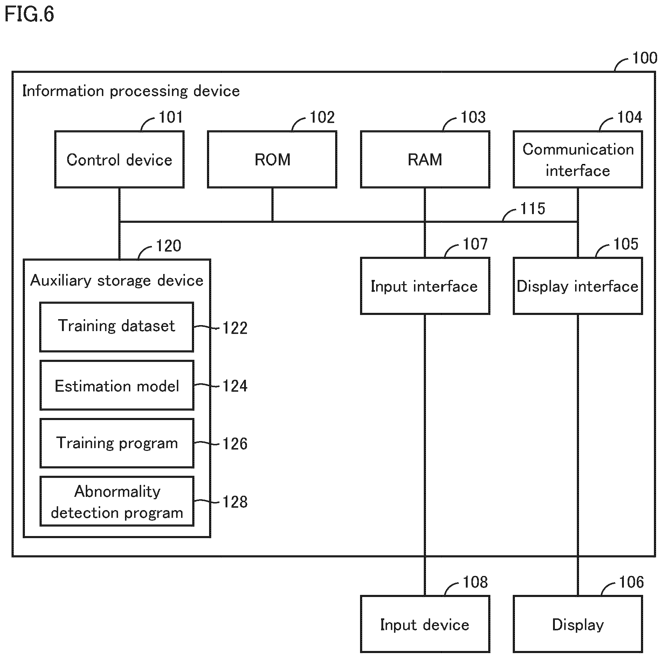

Next, the hardware configuration of the information processing device 100 shown in FIG. 5 will be described with reference to FIG. 6. FIG. 6 is a diagram showing an example of the hardware configuration of the information processing device 100.

The information processing device 100 includes the above-described control device 101, a ROM (Read Only Memory) 102, a RAM (Random Access Memory) 103, a communication interface 104, a display interface 105, an input interface 107, and an auxiliary storage device 120. These components are connected to a bus 115.

The control device 101 controls the operation of the information processing device 100 by executing various programs such as a training program 126 and an abnormality detection program 128. Upon receiving an execution instruction for various programs, the control device 101 reads out a program to be executed from the auxiliary storage device 120 or the ROM 102 to the RAM 103. The RAM 103 functions as working memory and temporarily stores various types of data necessary for executing the program.

The communication interface 104 is an interface for the information processing device 100 to communicate with external devices. The information processing device 100 exchanges data with external devices via the communication interface 104. Examples of such external devices include the above-described camera 30 and the above-described light source 40.

A display 106 is connected to the display interface 105. The display interface 105 sends image signals for displaying images to the display 106 in accordance with an instruction from the control device 101 or the like. The display 106 is, for example, a liquid crystal display, an organic EL (Electro Luminescence) display, or another display. Note that the display 106 may be integrally formed with the information processing device 100 or may be formed separately from the information processing device 100.

An input device 108 is connected to the input interface 107. The input device 108 is, for example, a mouse, keyboard, touch panel, or another device capable of accepting user operations. Note that the input device 108 may be integrally formed with the information processing device 100 or may be formed separately from the information processing device 100.

The auxiliary storage device 120 is, for example, a storage medium such as a hard disk, a flash memory, and an SSD (Solid State Drive). The auxiliary storage device 120 stores, for example, a training dataset 122, the above-described estimation model 124, a training program 126, and the abnormality detection program 128. The storage locations for the above-described items are not limited to the auxiliary storage device 120, and the above-described items may also be stored in the storage area (such as, e.g., cache memory) of the control device 101, the ROM 102, the RAM 103, an external device (e.g., a server), or the like.

The training program 126 is a program for generating the estimation model 124 using the training dataset 122. The training program 126 may be provided not as a standalone program but as a part of any program. In this case, the training processing performed by the training program 126 is realized in cooperation with any program. Even such a program that does not include some modules does not depart from the spirit of the training program 126 according to this embodiment. Furthermore, some or all of the functions provided by the training program 126 may also be realized by dedicated hardware. Furthermore, the information processing device 100 may also be configured in a form such as a so-called cloud service in which at least one server executes a part of the processing of the training program 126.

The abnormality detection program 128 is a program for detecting a yarn path abnormality regarding a filament F using the estimation model 124. The abnormality detection program 128 may be provided not as a standalone program but as a part of any program. In this case, the estimation processing performed by the abnormality detection program 128 is realized in cooperation with any program. Even such a program that does not include some modules does not depart from the spirit of the abnormality detection program 128 according to this embodiment. Furthermore, some or all of the functions provided by the abnormality detection program 128 may also be realized by dedicated hardware. Furthermore, the information processing device 100 may also be configured in a form such as a so-called cloud service in which at least one server executes a part of the processing of the abnormality detection program 128.

E. Training Dataset 122

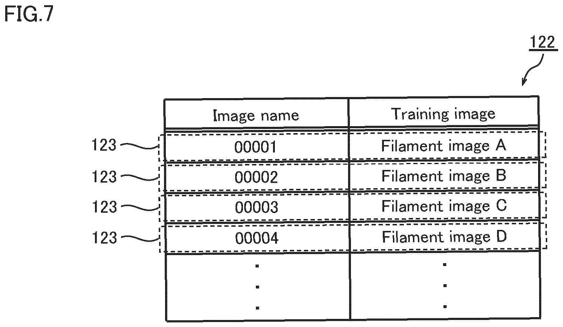

Next, the training dataset 122 used when the estimation model 124 shown in FIG. 6 is generated will be described with reference to FIG. 7. FIG. 7 is a diagram showing an example of the training dataset 122.

The training dataset 122 includes a plurality of pieces of training data 123. The number of pieces of training data 123 included in the training dataset 122 is optional. As an example, the number of pieces of training data 123 is from several tens to hundreds of thousands.

For each piece of training data 123, an image name is associated with a filament image. The image name is an identifier for uniquely identifying the filament image.

In the present embodiment, the training dataset 122 is constituted by normal filament images in which no filament F is out of the oil supply guide 11. Each normal filament image indicates the state in which the filaments F run inside the two yarn guide members 23 (see FIG. 2).

The training dataset 122 may include a filament image acquired from the above-described camera 30 of the spinning take-up device 1, or a filament image acquired from a camera of another spinning take-up device 1.

F. Functional Configuration of Information Processing Device 100

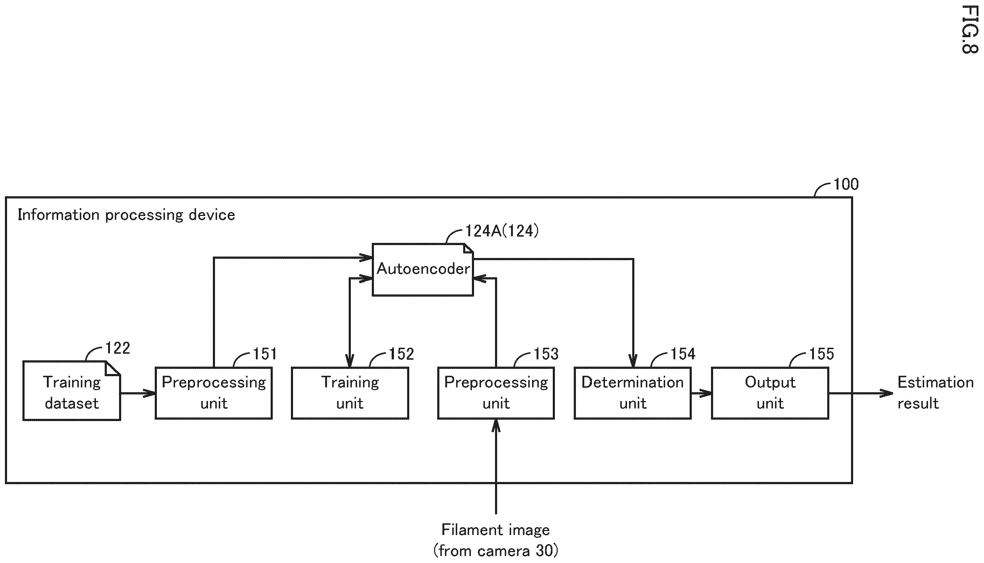

Next, the functional configuration of the information processing device 100 will be described with reference to FIGS. 8 to 12. FIG. 8 is a diagram showing an example of the functional configuration of the information processing device 100.

By executing the above-described training program 126 or the above-described abnormality detection program 128, the information processing device 100 functions as a preprocessing unit 151, a training unit 152, a preprocessing unit 153, a determination unit 154, and an output unit 155. As an example, the functions of the preprocessing unit 151 and the training unit 152 are implemented in the training program 126, and the functions of the preprocessing unit 153, the determination unit 154, and the output unit 155 are implemented in the abnormality detection program 128.

Hereinafter, the preprocessing unit 151, the training unit 152, the preprocessing unit 153, the determination unit 154, and the output unit 155 will be described in this order.

F1. Preprocessing Unit 151

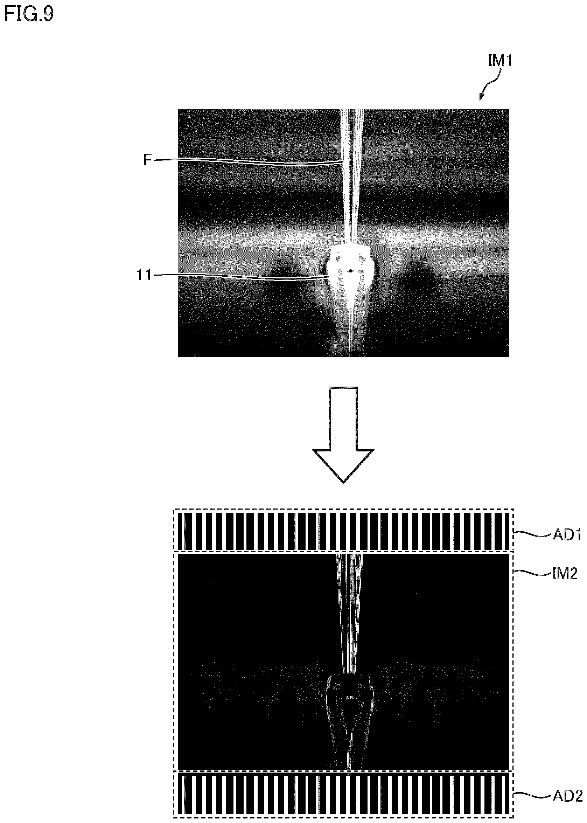

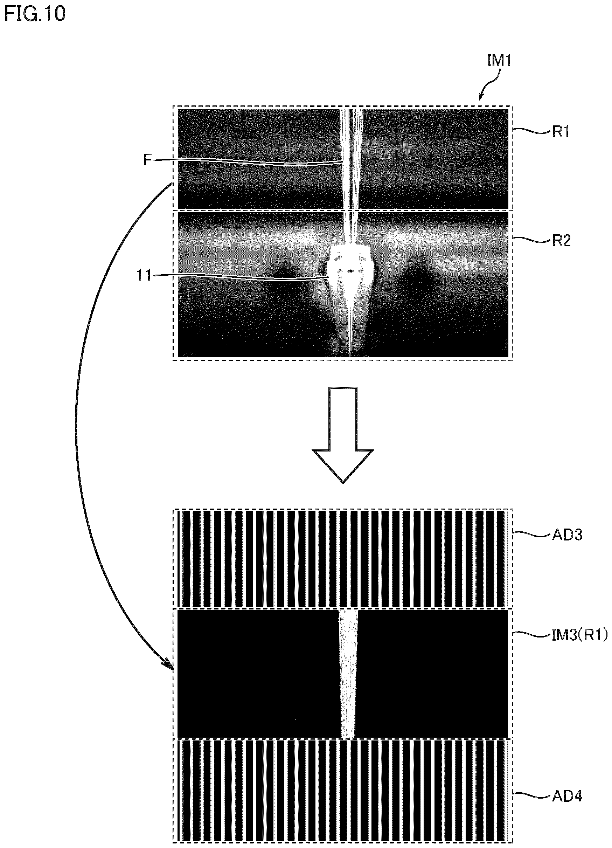

First, the function of the preprocessing unit 151 shown in FIG. 8 will be described with reference to FIGS. 9 and 10. FIG. 9 illustrates an example of preprocessing performed by the preprocessing unit 151. FIG. 10 illustrates another example of preprocessing performed by the preprocessing unit 151.

The preprocessing unit 151 performs preprocessing on a filament image defined by the above-described training data 123 (see FIG. 7). With this, the filament image is processed into a format suitable for detecting a yarn path abnormality.

In the example shown in FIG. 9, the preprocessing unit 151 executes preprocessing for extracting edges from a filament image IM1 for training. More specifically, the preprocessing unit 151 applies an edge filter (i.e., a differential filter) to the filament image IM1 for training to generate a filament image IM2 with emphasized edge portions.

In the filament image IM1, the background area is more blurring than areas of the oil supply guide 11 and the filaments F. Therefore, the background area disappears due to the edge extraction processing, and the outline of the oil supply guide 11 and the outline of the filaments F remain in the filament image IM2. As a result, information unnecessary for yarn path abnormality detection disappears. As a result, the accuracy in detection of yarn path abnormalities is improved.

Preferably, the preprocessing unit 151 adds image information AD1 and AD2 to the filament image IM2 after edge extraction. In the example of FIG. 9, the image information AD1 of a stripe pattern is added to the upper part of the filament image IM2. On the other hand, the image information AD2 of a stripe pattern is added to the lower part of the filament image IM2. As a result of the addition of the image information AD1 and AD2 to the filament image IM2, it is possible to avoid premature termination of later-described training by the training unit 152.

In the example shown in FIG. 10, the preprocessing unit 151 executes preprocessing for removing an area in which the oil supply guide 11 appears from the filament image IM1 for training. The method for removing the area in which the oil supply guide 11 appears is not particularly limited.

In one aspect, the preprocessing unit 151 searches for the oil supply guide 11 from the filament image IM1 to search for an image area R2 in which the oil supply guide 11 appears, and removes the image area R2 from the filament image IM1.

Various types of existing image processing are used for the processing for searching the oil supply guide 11. As an example, the oil supply guide 11 in the filament image IM1 is recognized using a trained model. The trained model is generated in advance by training processing using a training dataset. The training dataset includes a plurality of training images in which the oil supply guide 11 appears. With each training image, a label indicating whether or not the oil supply guide 11 appears is associated. The internal parameters of the trained model are optimized in advance by the training processing using such a training dataset.

Various machine learning algorithms can be employed as training methods for generating a trained model. As an example, deep learning, a convolutional neural network (CNN), a fully convolutional network (FCN), a support vector machine, and the like can be employed as such machine learning algorithms.

In another aspect, the preprocessing unit 151 identifies a predetermined range in the filament image IM1 as the image area R2 in which the oil supply guide 11 appears, and removes the image area R2 from the filament image IM1. Typically, the predetermined range is a lower area of the filament image IM1.

The preprocessing unit 151 then removes the image area R2 from the filament image IM1 for training, and generates the remaining image area R1 as a filament image IM3 for training. As shown in FIG. 10, in the filament image IM3 for training, only the filaments F passing upstream of the oil supply guide 11 appear, and the oil supply guide 11 does not appear.

The filament image IM3 from which the oil supply guide 11 has been removed is used in the later-described training processing, allowing the information processing device 100 to detect yarn path abnormalities without being affected by the type of oil supply guide 11. As a result, the accuracy in detection of yarn path abnormalities is improved. Also, designers do not necessarily need to collect filament images for training, for all types of oil supply guides 11, and can realize the function of detecting yarn path abnormalities more easily.

Preferably, the preprocessing unit 151 adds image information AD3 and AD4 to the filament image IM3 from which the image area R2 has been removed. In the example of FIG. 10, the image information AD3 of a stripe pattern is added to the upper part of the filament image IM3. On the other hand, the image information AD4 of a stripe pattern is added to the lower part of the filament image IM3. As a result of the addition of the image information AD3 and AD4 to the filament image IM3, it is possible to avoid premature termination of the later-described training by the training unit 152.

Note that the preprocessing by the preprocessing unit 151 does not necessarily need to be executed. For example, when the above-described camera 30 is arranged so that its shooting area does not include the oil supply guide 11, only the plurality of filaments F passing upstream of the oil supply guide 11 appear in the filament image IM for training. In this case, the preprocessing shown in FIG. 10 does not necessarily need to be executed.

The preprocessing unit 151 may perform both the preprocessing shown in FIG. 9 and the preprocessing shown in FIG. 10, or may perform only one of them.

The preprocessing unit 151 may also perform preprocessing different from the preprocessing shown in FIGS. 9 and 10. As an example, the preprocessing unit 151 may perform processing for cutting out areas in which the oil supply guide 11 and the filaments F appear, on the filament image IM1. In other words, the preprocessing unit 151 may apply processing for removing areas other than those in which the oil supply guide 11 and the filaments F appear, on the filament image IM1. For example, the preprocessing unit 151 removes areas other than those in which the oil supply guide 11 and the filaments F appear, by cutting a predetermined area out of the filament image IM1.

F2. Training Unit 152

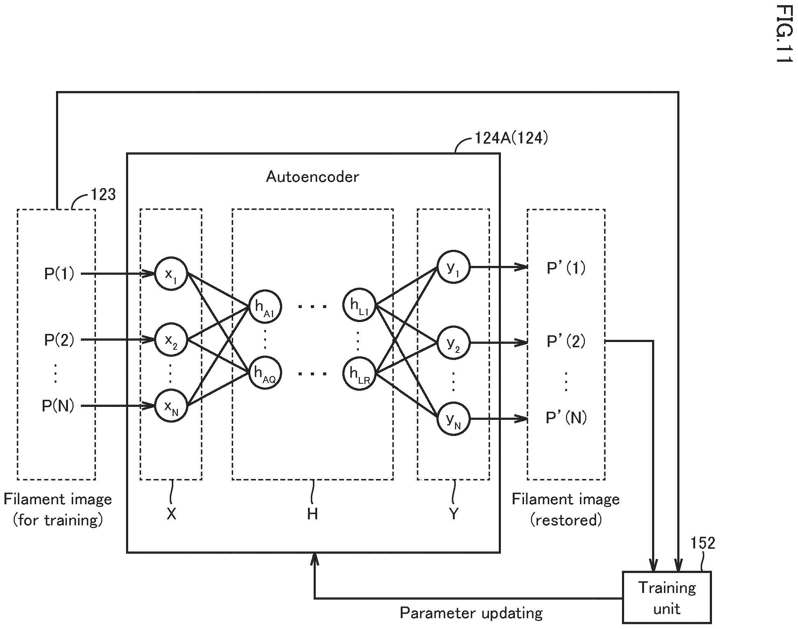

Next, the function of the training unit 152 shown in FIG. 8 will be described with reference to FIG. 11. FIG. 11 is a diagram showing an example of training processing performed by the training unit 152.

The training unit 152 executes training processing for generating an autoencoder 124A. The autoencoder 124A is an example of the above-described estimation model 124. The autoencoder 124A is machine-trained to compress the normal filament image in which no yarn path abnormality has occurred and then restore the filament image.

The machine learning algorithm employed in the training processing is not particularly limited, and for example, a neural network such as deep learning can be employed. The following will describe training processing using a neural network.

As shown in FIG. 11, the autoencoder 124A is constituted by an input layer X, an intermediate layer H, and an output layer Y

The input layer X is configured to receive an input of a normal filament image after the preprocessing by the preprocessing unit 151. The input layer X consists of, for example, N units $x_1$ to $x_N$ (N is a natural number). The number of units constituting the input layer X is equal to the dimension number of the input normal filament image.

As an example, if the number of pixels of the normal filament image is N pixels and the pixels of the normal filament image are input directly to the input layer X, the input layer X consists of N units. As another example, the feature amount of features extracted from the normal filament image may be input to the input layer X. In this case, the input layer X is configured so that its number of units is equal to the dimension number of the feature amount. Each unit constituting the input layer X outputs input data to each of the units of the first layer of the intermediate layer H.

The intermediate layer H consists of one layer or multiple layers. In the example of FIG. 11, the intermediate layer H consists of L layers (L is a natural number). Each layer of the intermediate layer H includes a plurality of units. The number of units in each layer of the intermediate layer H may be the same or different. In the example of FIG. 11, the first layer of the intermediate layer H consists of Q units $h_{A1}$ to $h_{AQ}$ (Q is a natural number). Also, the final layer of the intermediate layer H consists of R units $h_{L1}$ to $h_{LR}$ (R is a natural number).

Each of the units constituting each layer of the intermediate layer H is connected to each unit of the previous layer and each unit of the next layer. Each unit of each layer receives an output value from each unit of the previous layer, multiplies each output value by a weight, integrates the multiplication results, adds (or subtracts) a predetermined bias to the integration result, inputs the addition result (or subtraction result) to a predetermined function (e.g., a sigmoid function), and outputs the output value of the function to each unit of the next layer.

In the autoencoder 124A, the number of units constituting each layer of the intermediate layer H is less than the number of units constituting the input layer X. As a result, the dimension number of the normal filament image is reduced in the process in which the normal filament image is transmitted from the input layer X to the intermediate layer H.

The output layer Y is configured to restore the normal filament image compressed in the intermediate layer H. More specifically, the output layer Y consists of the same number of units as that of the input layer X. As an example, if the input layer X consists of N units, the output layer Y consists of N units. In the example of FIG. 11, the output layer Y consists of N units $y_1$ to $y_N$. In the following, the units yi to $y_N$ are also referred to as units y.

Each of the units y is connected to the units $h_{L1}$ to $h_{LR}$ of the final layer of the intermediate layer H. Each of the units y receives output values from the units of the final layer of the intermediate layer H, multiplies each output value by a weight, integrates the multiplication results, adds (or subtracts) a predetermined bias to the integration result, inputs the addition result (or subtraction result) to a predetermined function (for example, a sigmoid function), and outputs the output result of the function as an output value.

The following will describe processing for updating the internal parameters of the autoencoder 124A by the training unit 152.

The training unit 152 inputs pixels P(1) to P(N) of the first normal filament image to the autoencoder 124A. With this, the autoencoder 124A compresses the first normal filament image. Then, the autoencoder 124A restores the compressed filament image so that it approaches the input normal filament image. The dimension number of the restored filament image is equal to the dimension number of the input normal filament image. That is to say, the restored filament image is composed of pixels P'(1) to P'(N). Then, the training unit 152 calculates the error "Z" between the input filament image and the restored filament image. As an example, the error "Z" is calculated based on the following expression (1).

$$Z=\{(P(1)-P'(1))^2+ \ldots +(P(N)-P'(N))^2\}/N \ldots (1)$$

Then, the training unit 152 updates the internal parameters (e.g., weights and biases) of the autoencoder 124A so that the error "Z" becomes smaller. The updating of the internal parameters is realized, for example, by the backpropagation method.

The training unit 152 repeatedly performs the processing of updating the internal parameters of the autoencoder 124A, for each normal filament image to be learned. As a result, the autoencoder 124A is trained to compress a normal filament image and then restore the normal filament image.

In other words, the autoencoder 124A is trained to output, upon input of a normal filament image, a filament image similar to this normal filament image, and output, upon input of an abnormal filament image, a filament image different from this abnormal filament image. In other words, the autoencoder 124A functions as a kind of filter that allows normal filament images to pass through but does not allow abnormal filament images to pass through.

F3. Preprocessing unit 153

Next, the function of the preprocessing unit 153 shown in FIG. 8 will be described.

The preprocessing unit 153 performs preprocessing on a filament image for estimation acquired from the above-described camera 30 (see FIG. 1). Typically, the preprocessing unit 153 executes the same preprocessing as the preprocessing executed by the above-described preprocessing unit 151.

As an example, the preprocessing unit 153 executes processing for extracting edges from the filament image for estimation. Since the edge extraction processing has been described with reference to FIG. 9, the description thereof will not be repeated.

As another example, the preprocessing unit 153 executes processing for removing an area in which the oil supply guide 11 appears from the filament image for estimation. Since the removal processing has been described with reference to FIG. 10, the description thereof will not be repeated.

Note that the preprocessing by the preprocessing unit 153 does not necessarily need to be executed. For example, when the above-described camera 30 is arranged so that its shooting area does not include the oil supply guide 11, only the plurality of filaments F passing upstream of the oil supply guide 11 appear in the filament image for estimation. In this case, the above-described removal processing does not necessarily need to be executed.

Also, the preprocessing unit 153 may perform both the above-described edge extraction processing and the above-described removal processing, or may perform only one of them.

The preprocessing unit 153 may also perform preprocessing different from the above-described edge extraction processing and the above-described removal processing. As an example, the preprocessing unit 153 may perform processing for cutting out areas in which the oil supply guide 11 and the filaments F appear, on the filament image IM1. In other words, the preprocessing unit 153 may apply processing for removing areas other than those in which the oil supply guide 11 and the filaments F appear, on the filament image IM1. For example, the preprocessing unit 153 removes areas other than those in which the oil supply guide 11 and the filaments F appear, by cutting out a predetermined area within the filament image IM1.

F4. Determination Unit 154

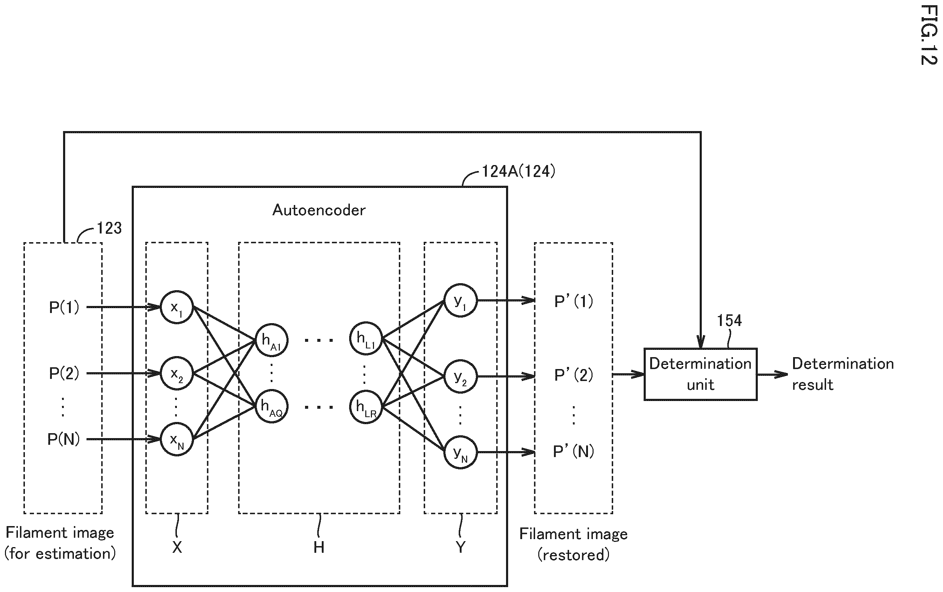

Next, the function of the determination unit 154 shown in FIG. 8 will be described with reference to FIG. 12. FIG. 12 illustrates an example of determination processing performed by the determination unit 154.

The determination unit 154 determines whether or not a yarn path abnormality regarding a filament F has occurred based on the degree of similarity between the filament image for estimation subjected to the above-described preprocessing by the preprocessing unit 153 and the restored filament image obtained by inputting the filament image for estimation to the autoencoder 124A.

More specifically, the determination unit 154 acquires the autoencoder 124A and inputs the filament image for estimation subjected to preprocessing performed by the preprocessing unit 153 to the autoencoder 124A. The autoencoder 124A may be acquired from a storage device within the information processing device 100 or from an external device. The autoencoder 124A outputs, upon input of a normal filament image, a filament image similar to this normal filament image, and outputs, upon input of an abnormal filament image, a filament image different from this abnormal filament image.

Then, the determination unit 154 calculates the degree of similarity between the filament image for estimation and the restored filament image. For the calculation method for calculating the degree of similarity, any algorithm is employed. As an example, the algorithm for calculating the degree of similarity can be MSE (Mean Squared Error), SSD (Sum of Squared Difference), SAD (Sum of Absolute Difference), NCC (Normalized Cross-Correlation), ZNCC (Zero-mean Normalized Cross-Correlation), or the like.

The determination unit 154 determines whether or not a yarn path abnormality has occurred, based on the result of comparison between the calculated degree of similarity and a predetermined threshold. Here, the magnitude of the calculated degree of similarity can vary depending on the employed algorithm. That is to say, the value of the calculated degree of similarity may be smaller or larger the more similar the filament image for estimation and the restored filament image are to each other.

As an example, an algorithm is employed in which the degree of similarity is smaller the more similar the filament image for estimation and the restored filament image are to each other. In this case, the determination unit 154 determines that a yarn path abnormality has occurred if the calculated degree of similarity is the predetermined threshold or more. On the other hand, the determination unit 154 determines that no yarn path abnormality has occurred if the calculated degree of similarity is smaller than the predetermined threshold.

As another example, an algorithm is employed in which the degree of similarity is larger the more similar the filament image for estimation and the restored filament image are to each other. In this case, the determination unit 154 determines that a yarn path abnormality has occurred if the calculated degree of similarity is the predetermined threshold or less. On the other hand, the determination unit 154 determines that no yarn path abnormality has occurred if the calculated degree of similarity is larger than the predetermined threshold.

The threshold may be suitably set by the installer or user of the information processing device 100. Preferably, the threshold is predetermined. Since the accuracy in detection of yarn path abnormalities depends on the setting of the threshold, the accuracy in detection of yarn path abnormalities is improved due to the predetermined threshold.

As described above, in the present embodiment, the determination unit 154 can detect a yarn path abnormality using the autoencoder 124A trained with normal filament images. In other words, in the present embodiment, the designer can realize the function of detecting a yarn path abnormality without collecting a variety of training data that represent yarn path abnormalities.

F5. Output Unit 155

Next, the function of the output unit 155 shown in FIG. 8 will be described.

The output unit 155 outputs a control instruction corresponding to the result of the determination by the above-described determination unit 154 to a predetermined output destination.

In one aspect, the control instruction from the output unit 155 is output to the above-described display 106 (see FIG. 6). With this, the display 106 displays a warning indicating that a yarn path abnormality has occurred. Preferably, an abnormal filament image is furthermore displayed on the display 106.

In another aspect, the control instruction from the output unit 155 is output to a notification lamp (not shown) included in the spinning take-up device 1. As an example, when the result of the determination by the determination unit 154 indicates normality, the output unit 155 turns on the notification lamp in a specific color (e.g., green). On the other hand, when the result of the determination by the determination unit 154 indicates a yarn path abnormality, the output unit 155 turns on the notification lamp in a color (e.g., red) different from that in the normal time.

In yet another aspect, the control instruction from the output unit 155 is output to a notification buzzer (not shown) included in the spinning take-up device 1. As an example, when the result of the determination by the determination unit 154 indicates normality, the output unit 155 does not cause the notification buzzer to output sound. On the other hand, when the result of the determination by the determination unit 154 indicates a yarn path abnormality, the output unit 155 causes the notification buzzer to output sound in a predetermined manner.

Note that, in the above description, an example has been described in which the output result of the output unit 155 is output to a device included in the spinning take-up device 1, but the output result of the output unit 155 may be transmitted to an external device different from the spinning take-up device 1. As an example, the output result may be transmitted to a communication terminal registered in advance. This allows the person in charge or administrator to recognize that a yarn path abnormality has occurred within the spinning take-up device 1.

G. Layout Pattern

As described above, the camera 30 is arranged inside the spinning take-up device 1 so as to be able to capture images of a plurality of filaments F passing through the oil supply guide 11. Also, the light source 40 is arranged inside the spinning take-up device 1 so as to be able to illuminate a plurality of filaments F passing through the oil supply guide 11.

At this time, the light source 40 illuminates the filaments F, making the difference in luminance between the filaments F and the background clear, and making it easier to remove noise in the background or the like through the edge detection processing performed by the above-described preprocessing units 151 and 153. As a result, the accuracy in detection of yarn path abnormalities regarding a filament F is improved.

Preferably, the camera 30 and the light source 40 are arranged so that the optical axis of the light source 40 is inclined with respect to the optical axis of the camera 30. This reduces the amount of light reflected off the camera 30. As a result, overexposure in the filament image can be prevented.

More preferably, the light source 40 is a spotlight capable of locally illuminating a specific location. The angle at which the spotlight emits light is, for example, within 45 degrees. Preferably, the angle at which the spotlight emits light is, for example, within 30 degrees. The spotlight is arranged so that its illumination range 40R includes at least a plurality of filaments passing through the oil supply guide 11. In other words, the spotlight is arranged so that it does not illuminate objects other than the filaments as much as possible. Also, the spotlight is arranged so that its illumination range 40R intersects with the optical axis of the camera 30.

This can prevent objects other than the filaments from being illuminated with light. Therefore, the amount of light reflected off the camera 30 can be further reduced. As a result, it is possible to prevent overexposure in the filament image more reliably.

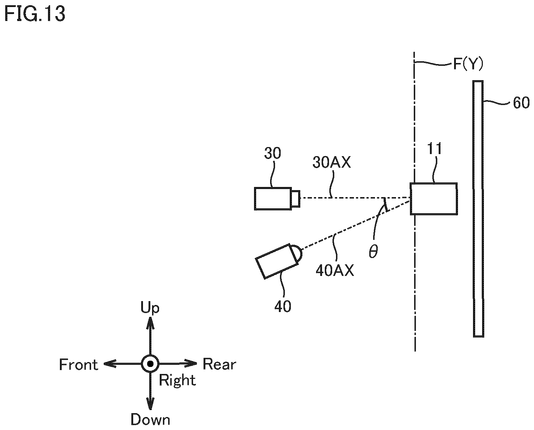

The following will describe specific examples regarding the layout patterns of the camera 30 and the light source 40 with respect to the oil supply guide 11, with reference to FIGS. 13 to 15.

G1. Specific Example 1

FIG. 13 illustrates an example of a layout pattern of the camera 30 and the light source 40. FIG. 13 shows the positional relationship among the oil supply guide 11, the camera 30, and the light source 40 when viewed from the right.

In this example, the light source 40 is arranged so as to overlap with the camera 30 when viewed from above or from below. Also, the light source 40 is arranged below the camera 30. This can reduce the amount of light reflected off the camera 30. As a result, overexposure in a filament image can be prevented.

In the example of FIG. 13, the optical axis 40AX of the light source 40 intersects with the optical axis 30AX of the camera 30. The angle $\theta$ made by the optical axes 30AX and 40AX is greater than 0° and smaller than 90°. The angle $\theta$ may be 30° or more, may be 45° or more, or may be 60° or more.

The light source 40 is located in front (i.e., forward) of the oil supply guide 11 in the direction in which the oil supply guide 11 is viewed from the camera 30 (i.e., in the rearward direction). As a result, the amount of light directly entering the camera 30 from the light source 40 is reduced. This can prevent the occurrence of overexposure in a filament image.

Preferably, an anti-reflection member 60 is provided inside the spinning take-up device 1 to prevent reflection of light emitted from the light source 40. The anti-reflection member 60 is provided behind (i.e., backward of) the oil supply guide 11 in the direction in which the oil supply guide 11 is viewed from the camera 30. In this case, such mechanisms are arranged in the order of "the camera 30 (light source 40), the oil supply guide 11, and the anti-reflection member 60" when viewed from the front side. With this, the anti-reflection member 60 prevents light emitted from the light source 40 from being reflected off the camera 30. As a result, it is possible to prevent overexposure in a filament image more reliably.

More preferably, the anti-reflection member 60 is black. The reflectance of black is lower than the reflectance of other colors. Therefore, the black anti-reflection member 60 can more reliably prevent light emitted from the light source 40 from being reflected off the camera 30.

G2. Specific Example 2

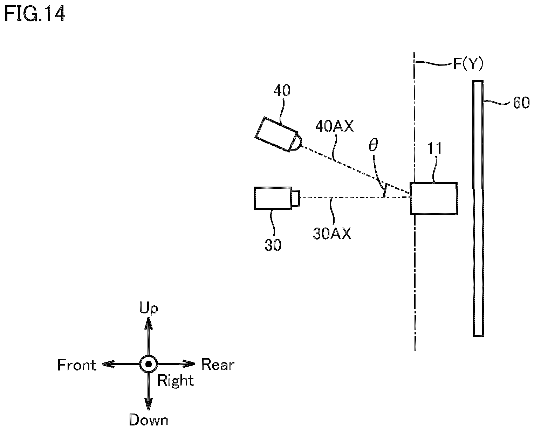

FIG. 14 illustrates yet another example of the layout pattern of the camera 30 and the light source 40. FIG. 14 shows the positional relationship among the oil supply guide 11, the camera 30, and the light source 40 when viewed from the right.

The light source 40 is arranged so as to overlap with the camera 30 when viewed from above or from below. In this example, the light source 40 is arranged above the camera 30. This can reduce the amount of light reflected off the camera 30. As a result, overexposure in a filament image can be prevented.

In the example of FIG. 14, the optical axis 40AX of the light source 40 intersects with the optical axis 30AX of the camera 30. The angle $\theta$ made by the optical axes 30AX and 40AX is greater than 0° and smaller than 90°. The angle $\theta$ may be 30° or more, may be 45° or more, or may be 60° or more.

The light source 40 is located in front (i.e., forward) of the oil supply guide 11 in the direction in which the oil supply guide 11 is viewed from the camera 30 (i.e., in the rearward direction). As a result, the amount of light directly entering the camera 30 from the light source 40 is reduced. This can prevent the occurrence of overexposure in a filament image.

Preferably, an anti-reflection member 60 is provided inside the spinning take-up device 1 to prevent reflection of light emitted from the light source 40. Since the anti-reflection member 60 is as described above, the description thereof will not be repeated.

Note that, in the description above, an example has been described in which one light source 40 is arranged, but the number of light sources 40 may be two or more. As an example, a first light source 40 may be arranged above the camera 30, and a second light source 40 may be arranged below the camera 30.

G3. Specific Example 3

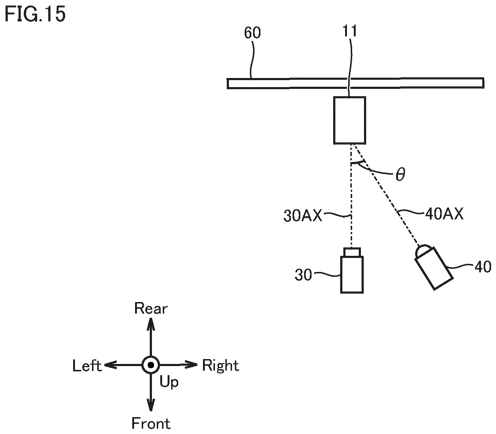

FIG. 15 illustrates yet another example of the layout pattern of the camera 30 and the light source 40. FIG. 15 shows the positional relationship among the oil supply guide 11, the camera 30, and the light source 40 when viewed from above.

In this example, the light source 40 is arranged to the right of the camera 30. This can reduce the amount of light reflected off the camera 30. As a result, overexposure in a filament image can be prevented.

In the example of FIG. 15, the optical axis 40AX of the light source 40 intersects with the optical axis 30AX of the camera 30. The angle $\theta$ made by the optical axes 30AX and 40AX is greater than 0° and smaller than 90°. The angle $\theta$ may be 30° or more, may be 45° or more, or may be 60° or more.

The light source 40 is located in front (i.e., forward) of the oil supply guide 11 in the direction in which the oil supply guide 11 is viewed from the camera 30 (i.e., in the rearward direction). As a result, the amount of light directly entering the camera 30 from the light source 40 is reduced. This can prevent the occurrence of overexposure in a filament image.

Preferably, an anti-reflection member 60 is provided inside the spinning take-up device 1 to prevent reflection of light emitted from the light source 40. Since the anti-reflection member 60 is as described above, the description thereof will not be repeated.

Note that, in the above description, an example has been described in which the light source 40 is arranged to the right of the camera 30, but the light source 40 may be arranged to the left of the camera 30.

Note that, in the above description, an example has described in which one light source 40 is arranged, but the number of light sources 40 may be two or more. As an example, a first light source 40 may be arranged to the right of the camera 30 and a second light source 40 may be arranged to the left of the camera 30.

H. Flowchart of Training Processing

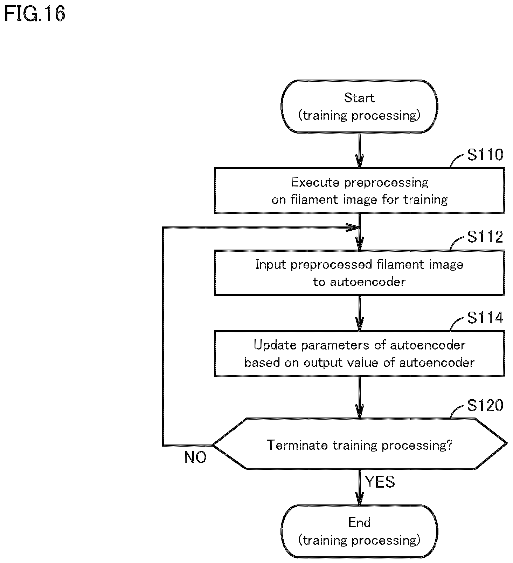

Next, a flowchart of training processing performed by the information processing device 100 will be described with reference to FIG. 16. FIG. 16 is a flowchart showing a flow of the training processing.

The control device 101 of the information processing device 100 executes the above-described training program 126 (see FIG. 6) to execute various types of processing shown in FIG. 16. In another aspect, some or all pieces of the processing shown in FIG. 16 may be executed by circuit elements or other hardware.

In step S110, the control device 101 functions as the above-described preprocessing unit 151 (see FIG. 8) to execute predetermined preprocessing on a filament image serving as training data 123. Since the preprocessing is as described above, the description thereof will not be repeated.

In step S112, the control device 101 inputs the filament image preprocessed in step S110 to the above-described autoencoder 124A.

In step S114, the control device 101 functions as the above-described training unit 152 (see FIG. 8) to calculate the error between the filament image input to the autoencoder 124A and a restored filament image output from the autoencoder 124A. The control device 101 then updates the internal parameters of the autoencoder 124A so that this error becomes smaller. The parameters are updated, for example, by the backpropagation method. Since the training processing in step S114 is as described above, the description thereof will not be repeated.

In step S120, the control device 101 determines whether or not to terminate the training processing. As an example, the control device 101 determines that the training processing is to be terminated if the estimation accuracy using test data exceeds a desired accuracy. Alternatively, the control device 101 determines that the training processing is to be terminated if the number of updates of the internal parameters of the autoencoder 124A exceeds a predetermined number.

If it is determined that the training processing is to be terminated (YES, in step S120), the control device 101 terminates the processing shown in FIG. 16. Otherwise (NO, in step S120), the control device 101 returns the control to step S112.

I. Flowchart of Abnormality Detection Processing

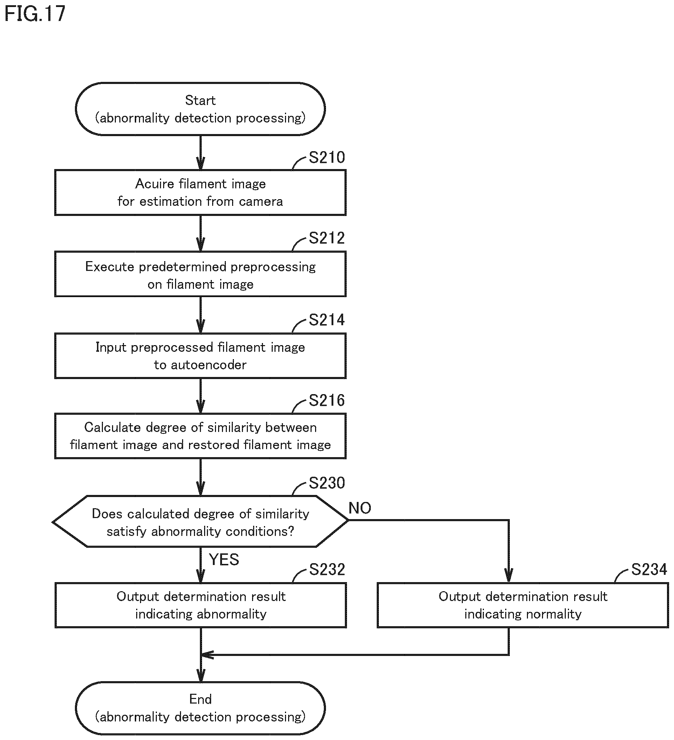

Next, a flowchart of abnormality detection processing performed by the information processing device 100 will be described with reference to FIG. 17. FIG. 17 is a flowchart showing a flow of the abnormality detection processing.

The control device 101 of the information processing device 100 executes the above-described abnormality detection program 128 (see FIG. 6) to execute various types of processing shown in FIG. 17. In another aspect, some or all pieces of the processing shown in FIG. 17 may be executed by circuit elements or other hardware.

In step S210, the control device 101 acquires a filament image for estimation from the above-described camera 30.

In step S212, the control device 101 functions as the above-described preprocessing unit 153 (see FIG. 8) to execute predetermined preprocessing on the filament image acquired in step S210. Since the preprocessing is as described above, the description thereof will not be repeated.

In step S214, the control device 101 inputs the filament image preprocessed in step S212 to the trained autoencoder 124A.

In step S216, the control device 101 functions as the above-described determination unit 154 (see FIG. 8) to calculate the degree of similarity between the filament image input to the autoencoder 124A and a restored filament image output from the autoencoder 124A.

In step S230, the control device 101 functions as the above-described determination unit 154 to determine whether or not the degree of similarity calculated in step S216 satisfies abnormality conditions. The abnormality conditions are satisfied when the filament image and the restored filament image are not similar to each other. As an example, if an algorithm is employed in which the degree of similarity is smaller the more similar the filament image for estimation and the restored filament image are to each other, then, the above-described abnormality conditions are satisfied when the degree of similarity exceeds a predetermined threshold.

If it is determined that the degree of similarity calculated in step S216 satisfies the abnormality conditions (YES, in step S230), the control device 101 switches the control to step S232. Otherwise (NO, in step S230), the control device 101 switches the control to step S234.

In step S232, the control device 101 functions as the above-described output unit 155 (see FIG. 8) to output the determination result indicating the occurrence of a yarn path abnormality. Since the output processing is as described above, the description thereof will not be repeated.

In step S234, the control device 101 functions as the above-described output unit 155 to output the determination result indicating normality. Since the output processing is as described above, the description thereof will not be repeated.

Preferably, the abnormality detection processing shown in FIG. 17 is executed periodically when the spinning take-up device 1 is producing yarn.

J. First Modification

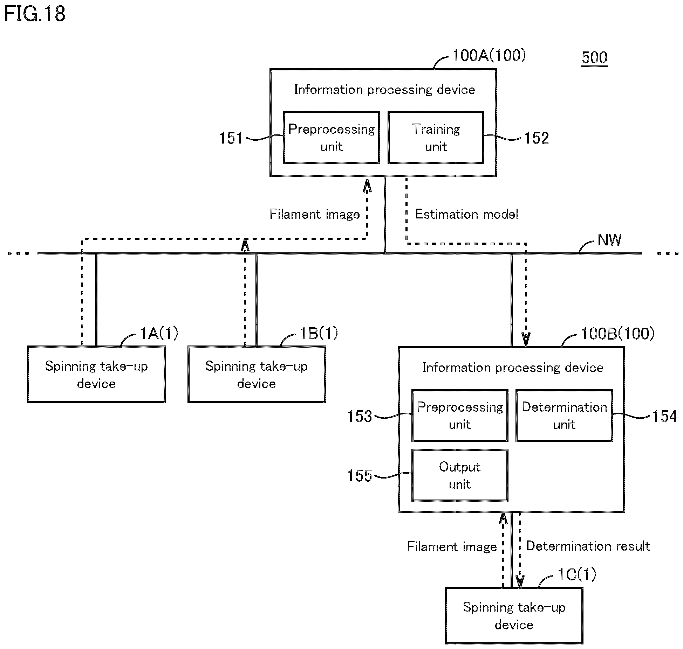

Next, a first modification according to the above embodiment will be described with reference to FIG. 18. FIG. 18 is a diagram showing an example of device configurations of a filament abnormality detection system 500 according to the present modification.

In the example of FIG. 8 above, the training function and the abnormality detection function were implemented in the same information processing device 100. However, the training function and the abnormality detection function do not necessarily need to be implemented in the same information processing device 100. As an example, the training function and the abnormality detection function may be implemented in different information processing devices 100.

As shown in FIG. 18, the filament abnormality detection system 500 includes one or more spinning take-up devices 1 and one or more information processing devices 100. In the example of FIG. 18, the filament abnormality detection system 500 includes three spinning take-up devices 1A to 1C and two information processing devices 100A and 100B.

The information processing device 100A collects the above-described training data 123 (see FIG. 7) from the spinning take-up devices 1 (e.g., spinning take-up devices 1A and 1B) connected to a network NW. Then, the training unit 152 of the information processing device 100A executes training processing using the training data 123 preprocessed by the preprocessing unit 151 to generate the above-described estimation model 124. The generated estimation model 124 is transmitted to the information processing device 100B.

The information processing device 100B acquires a filament image for estimation from the spinning take-up device 1C. Then, the determination unit 154 of the information processing device 100B inputs the filament image for estimation preprocessed by the preprocessing unit 153 to the autoencoder 124A. Then, the determination unit 154 of the information processing device 100B determines whether or not a yarn path abnormality regarding a filament has occurred, based on the degree of similarity between the filament image for estimation and the restored filament image obtained from the autoencoder 124A. Since the determination processing is as described above, the description thereof will not be repeated. Thereafter, the output unit 155 of the information processing device 100B outputs the determination result to the spinning take-up device 1C.

K. Second Modification

Although, in the above description, the estimation model 124 serving as the autoencoder 124A has been described, the estimation model 124 is not limited to the autoencoder 124A.

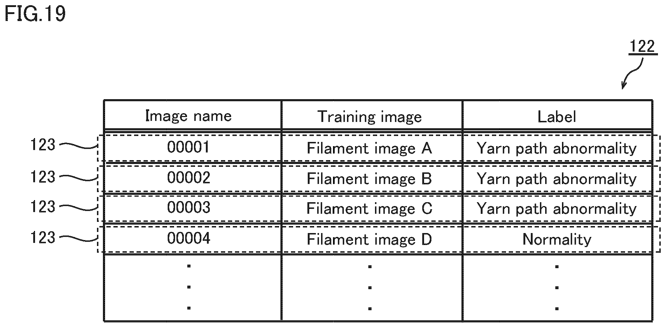

The following will describe, with reference to FIGS. 19 to 21, an example in which a yarn path abnormality is detected using an estimation model 124 other than the autoencoder 124A.

K1. Training Dataset 122

First, the training dataset 122 used to generate the estimation model 124 other than the autoencoder 124A will be described with reference to FIG. 19. FIG. 19 is a diagram showing the training dataset 122 according to the present modification.

The training dataset 122 includes a plurality of pieces of training data 123. The number of pieces of training data 123 included in the training dataset 122 is optional. As an example, the number of pieces of training data 123 is from several tens to hundreds of thousands.

The training data 123 includes filament images for training in which a plurality of filaments passing through the oil supply guide 11 appear. In the present modification, a label indicating whether or not a yarn path abnormality regarding a filament has occurred is further associated with each of the training filament images. Otherwise, this training data 123 is the same as the above-described training data 123 shown in FIG. 7.

As an example, the labels defined in the training dataset 122 include "yarn path abnormality" indicating that at least one filament is out of the normal yarn path on the oil supply guide 11, and "normality" indicating that filaments are passing through the normal yarn path on the oil supply guide 11. Each label may be distinguished by a combination of numbers or a string of characters.

K2. Training Unit 152

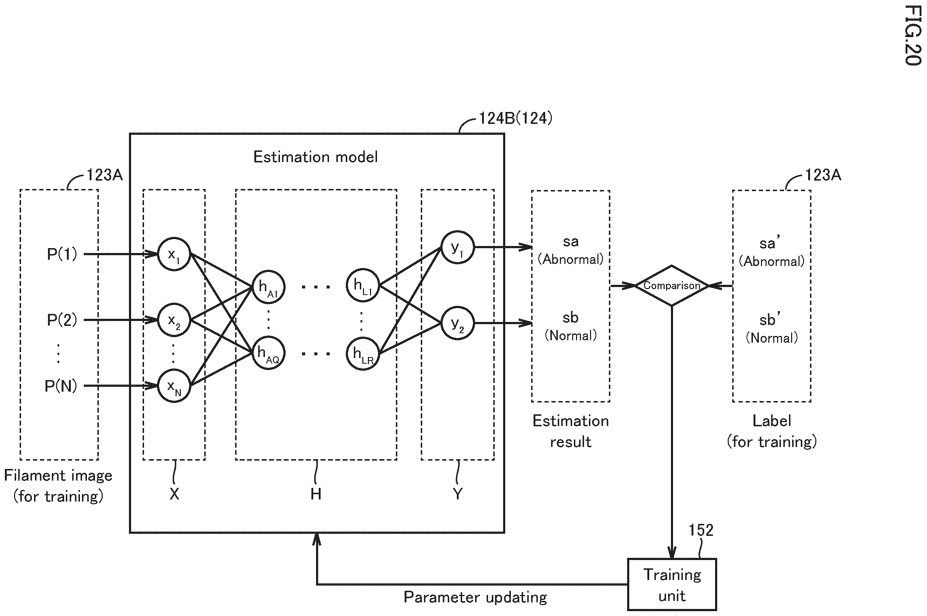

Next, a modification of the training unit 152 shown in FIG. 8 will be described with reference to FIG. 20. FIG. 20 illustrates an example of training processing performed by the training unit 152.

The training unit 152 generates an estimation model 124B according to the present modification by training processing using the training dataset 122 shown in FIG. 19. The machine learning algorithm employed in the training processing is not particularly limited, and for example, deep learning, a convolutional neural network (CNN), a fully convolutional neural network (FCN), Regions with Convolutional Neural Network (R-CNN), Fast R-CNN, Faster R-CNN, You Only Look Once (YOLO), a support vector machine, or the like may be employed. The following will describe the training processing using deep learning.

As shown in FIG. 20, the estimation model 124B is constituted by an input layer X, an intermediate layer H, and an output layer Y

The input layer X is configured to receive, as an input, a filament image serving as the training data 123. The input layer X consists of, for example, N units $x_1$ to $x_N$ (N is a natural number). The number of units constituting the input layer X is the same as the dimension number of the input information.

As an example, if the number of pixels of the filament image for training is N pixels and the pixels of the filament image are input directly to the input layer X, the input layer X consists of N units. As another example, feature extraction processing (preprocessing) may be performed on the filament image. In this case, the amounts of extracted features are input to the input layer X. The input layer X is configured so that the number of units thereof is equal to the dimension number of the feature amount after the feature extraction. Each of the units constituting the input layer X outputs input data to each unit in the first layer of the intermediate layer H.

The intermediate layer H consists of one layer or multiple layers. In the example of FIG. 20, the intermediate layer H consists of L layers (L is a natural number). Each layer of the intermediate layer H includes a plurality of units. The number of units in each layer of the intermediate layer H may be the same or different. In the example of FIG. 20, the first layer of the intermediate layer H consists of Q units $h_{A1}$ to $h_{AQ}$ (Q is a natural number). Also, the final layer of the intermediate layer H consists of R units $h_{L1}$ to $h_{LR}$ (R is a natural number).

Each of the units constituting each layer of the intermediate layer H is connected to each unit of the previous layer and each unit of the next layer. Each unit of each layer receives an output value from each unit of the previous layer, multiplies each output value by a weight, integrates the multiplication results, adds (or subtracts) a predetermined bias to the integration result, inputs the addition result (or subtraction result) to a predetermined function (e.g., a sigmoid function), and outputs the output value of the function to each unit of the next layer.

The output layer Y outputs the estimation result according to the input filament image. The output layer Y consists of units yi and $y_2$, for example.

Each of the units yi and $y_2$ is connected to the units $h_{L1}$ to $h_{LR}$ of the final layer of the intermediate layer H. Each of the units $y_1$ and $y_2$ receives output values from the units of the final layer of the intermediate layer H, multiplies each output value by a weight, integrates the multiplication results, adds (or subtracts) a predetermined bias to the integration result, inputs the addition (or subtraction) result to a predetermined function (for example, a sigmoid function), and outputs the output result of the function as an output value.

The number of units constituting the output layer Y is determined according to the number of types of labels defined in the training data 123. As an example, if the labels defined in the training data 123 include two types, namely, "yarn path abnormality" and "normality", the number of units constituting the output layer Y is two, namely, the units yi and $y_2$. In this case, the unit yi outputs a score "sa" indicating the likelihood that a yarn path abnormality has occurred. The unit $y_2$ outputs a score "sb" indicating the likelihood that a filament yarn path is normal.

The following will describe processing for updating the internal parameters of the estimation model 124B performed by the training unit 152.

The training unit 152 inputs the filament image defined in the first piece of training data 123 to the estimation model 124B. Next, the training unit 152 compares the estimation results "sa" and "sb" output from the estimation model 124B, and the correct answer scores "sa'" and "sb'" according to the label associated with the first piece of training data 123.

As an example, if the label associated with the training data 123 is "yarn path abnormality", the correct answer score is (sa', sb') = (1,0). On the other hand, if the label associated with the training data 123 is "normality", the correct answer score is (sa', sb') = (0,1).

The training unit 152 calculates the error "Z" between the output results "sa" and "sb" of the estimation model 124B, and the correct answer scores "sa'" and "sb'". The error "Z" is calculated based on the following expression (2), for example.

$$Z=\{(sa-sa')^2+(sb-sb')^2\}/2 \ldots (2)$$

Then, the training unit 152 updates various types of parameters (e.g., weights and biases) of the estimation model 124B so that the error "Z" becomes smaller. The updating of the parameters is realized, for example, by the backpropagation method.

The training unit 152 repeatedly performs the processing for updating the internal parameters of the estimation model 124B, for each piece of training data 123 included in the training dataset 122. As a result, the estimation model 124B is trained to output more accurate estimation results as learning progresses.

Note that the training unit 152 does not necessarily need to use all pieces of the training data 123 included in the training dataset 122 for the training processing but may use some pieces of the training data 123 included in the training dataset 122 to generate the estimation model 124B. The remaining pieces of training data 123 are used, for example, to evaluate the estimation model 124B.

K3. Determination Unit 154

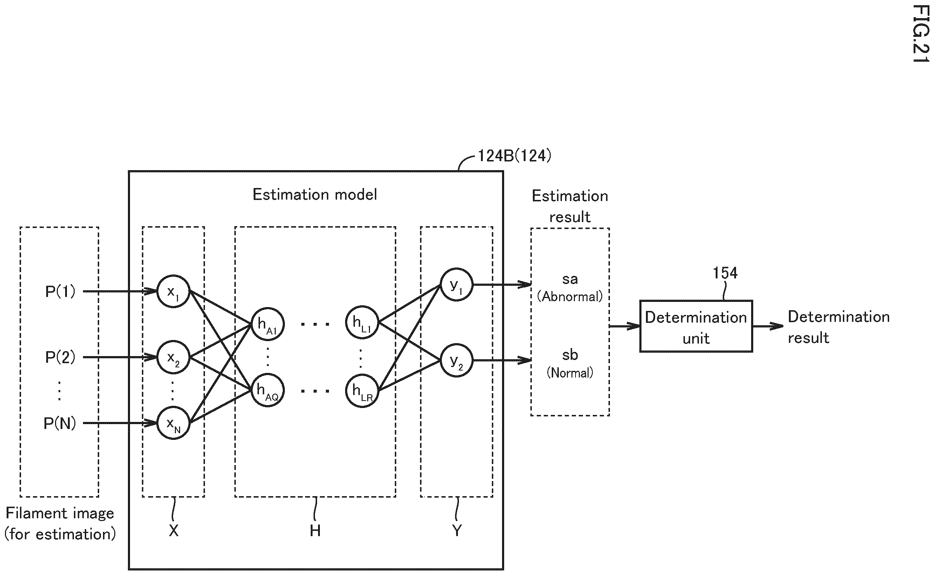

Next, a modification of the determination unit 154 shown in FIG. 8 will be described with reference to FIG. 21. FIG. 21 illustrates an example of determination processing performed by the determination unit 154.

First, the determination unit 154 acquires the estimation model 124B generated by the training unit 152 from the storage location. The estimation model 124B may be acquired from the above-described auxiliary storage device 120 or from an external device.

Next, the determination unit 154 causes the above-described camera 30 to capture an image of the oil supply guide 11 through which the filaments are passing, and obtains a filament image for estimation from the camera 30. Next, the determination unit 154 inputs the filament image for estimation to the estimation model 124B and determines whether or not a yarn path abnormality has occurred, based on the output result obtained from the estimation model 124B in response to the input.

The estimation model 124B includes, for example, a score "sa" indicating the likelihood that the filament yarn path is abnormal and a score "sb" indicating the likelihood that the filament yarn path is normal. In this case, if the score "sa" is above a first threshold and the score "sb" is below a second threshold, the determination unit 154 determines that a yarn path abnormality regarding a filament has occurred. Otherwise, the determination unit 154 determines that no yarn path abnormality regarding a filament has occurred.

The first threshold and the second threshold may be preset or set as appropriate by the user. The first threshold and the second threshold may be the same or different.

Note that, although the above description has been given on the assumption that the estimation model 124B outputs two scores "sa" and "sb," the estimation model 124B may be configured to output only the score "sa" indicating the likelihood that a yarn path abnormality has occurred. In this case, if the score "sa" exceeds the first threshold, the determination unit 154 determines that a yarn path abnormality regarding a filament has occurred. On the other hand, when the score "sa" is equal to or below the first threshold, the determination unit 154 determines that no yarn path abnormality regarding a filament has occurred.

The embodiments disclosed herein are to be considered illustrative in all respects and not restrictive. The scope of the present invention is indicated not by the above description but by the claims, and all changes within the scope and meanings equivalent to the claims are intended to be included therein.

LIST OF REFERENCE NUMERALS

| | |
|---|---|
| 1 | Spinning take-up device |
| 30 | Camera |
| 40 | Light source |
| 60 | Anti-reflection member |
| 100 | Information processing device |
| 101 | Control device |

123 Training data
124 Estimation model
124A Autoencoder
124B Estimation model

**Claims**

1. A filament abnormality detection device capable of detecting an abnormality with respect to a spinning take-up device (1) configured to take up a plurality of filaments spun from a spinning device, the spinning take-up device (1) including a guide (11) for guiding the plurality of filaments fed from upstream to downstream and bringing them closer to each other, the filament abnormality detection device comprising a control device (101), wherein the control device (101) is configured to execute:

   processing for acquiring, from a camera (30) arranged so that a shooting range of the camera (30) at least includes the plurality of filaments passing through the guide (11), a filament image for estimation in which the plurality of filaments appear;
   processing for determining whether or not a yarn path abnormality has occurred, based on an estimation model (124) subjected to machine learning so as to detect a yarn path abnormality in which at least one of the plurality of filaments is out of the guide (11), and the filament image for estimation; and
   processing for outputting a determination result of the processing for determining.

2. The filament abnormality detection device according to claim 1,

   wherein the estimation model (124) is an autoencoder (124A) subjected to machine learning so as to compress a normal filament image in which no yarn path abnormality has occurred and then restore the filament image, and in the processing for determining, whether or not a yarn path abnormality has occurred is determined based on a degree of similarity between the filament image for estimation and a restored filament image obtained by inputting the filament image for estimation to the autoencoder (124A).

3. The filament abnormality detection device according to claim 2, wherein in the processing for determining, whether or not a yarn path abnormality has occurred is determined based on a result of comparison between the degree of similarity and a predetermined threshold.

4. The filament abnormality detection device according to claim 1,

   wherein the estimation model (124) is generated by machine learning using multiple pieces of training data (123), in each of the multiple pieces of training data (123), a label indicating whether or not the yarn path abnormality has occurred is associated with a filament image for training in which a plurality of filaments passing through the guide appear, and in the processing for determining, whether or not the yarn path abnormality has occurred is determined based on an output result obtained from the estimation model (124) in response to input of the filament image for estimation to the estimation model (124).

5. The filament abnormality detection device according to any one of claims 1 to 4,

   wherein the processing for determining includes:

   processing for performing preprocessing on the filament image for estimation; and
   processing for inputting the preprocessed filament image for estimation to the estimation model (124), and

   the preprocessing includes processing for extracting an edge from the filament image for estimation.

6. The filament abnormality detection device according to any one of claims 1 to 5, wherein the spinning take-up device (1) further includes a light source (40) arranged so that an illumination range of the light source (40) at least includes the plurality of filaments passing upstream of the guide (11).

7. The filament abnormality detection device according to claim 6,

wherein the guide (11) includes:

> a body (20) having a surface with which the plurality of filaments fed from the spinning device in a direction of gravity come into contact;
> a discharge opening (25) formed in the surface and configured to discharge oil solution; and
> two yarn guide members (23) provided on the surface at locations on both sides of the discharge opening (25) in a horizontal direction, and configured to guide the plurality of filaments fed in the direction of gravity toward a center of the discharge opening (25) in the horizontal direction, and

> the camera (30) is arranged so that a shooting range of the camera (30) at least includes the plurality of filaments passing upstream of the surface, and
> the light source (40) is arranged so that an illumination range of the light source (40) at least includes the plurality of filaments passing upstream of the surface.

8. The filament abnormality detection device according to claim 6 or 7,
wherein an optical axis of the light source (40) is inclined with respect to an optical axis of the camera (30).

9. The filament abnormality detection device according to any one of claims 6 to 8,
wherein the light source (40) is provided in front of the guide (11) in a direction in which the guide (11) is viewed from the camera (30).

10. The filament abnormality detection device according to any one of claims 6 to 9,

> wherein the spinning take-up device (1) further includes an anti-reflection member (60) configured to prevent reflection of light emitted from the light source (40), and
> the anti-reflection member (60) is provided behind the guide (11) in a direction in which the guide (11) is viewed from the camera (30).

11. The filament abnormality detection device according to claim 10,
wherein the anti-reflection member (60) is black.

12. The filament abnormality detection device according to any one of claims 6 to 11,

> wherein the light source (40) is a spotlight, and
> an illumination range of the spotlight intersects with an optical axis of the camera (30).

13. An abnormality detection program capable of detecting an abnormality with respect to a spinning take-up device (1) configured to take up a plurality of filaments spun from a spinning device, the spinning take-up device (1) including a guide (11) for guiding the plurality of filaments and bringing them closer to each other, the abnormality detection program causing a filament abnormality detection device to execute:

> a step of acquiring, from a camera (30) arranged so that a shooting range of the camera (30) at least includes the plurality of filaments passing through the guide (11), a filament image for estimation in which the plurality of filaments appear;
> a step of inputting the filament image for estimation to an estimation model (124) subjected to machine learning so as to estimate a yarn path abnormality in which at least one of the plurality of filaments is out of the guide (11);
> a step of determining whether or not the yarn path abnormality has occurred, based on an output result of the estimation model (124); and
> a step of outputting a determination result in the step of determining.

14. The abnormality detection program according to claim 13,

> wherein the estimation model (124) is an autoencoder (124A) subjected to machine learning so as to compress a normal filament image in which no yarn path abnormality has occurred and then restore the filament image, and
> in the step of determining, whether or not the yarn path abnormality has occurred is determined based on a degree of similarity between the filament image for estimation and the restored filament image obtained by inputting the filament image for estimation to the autoencoder (124A).

**15.** The abnormality detection program according to claim 13 or 14,

wherein the step of determining includes:

a step of performing preprocessing on the filament image for estimation; and
a step of inputting the preprocessed filament image for estimation to the estimation model (124), and

the preprocessing includes processing for extracting an edge from the filament image for estimation.

FIG.1

FIG.2

FIG.3

Up

Front ←⊙→ Rear
Right

Down

FIG.4

(A)

(B)

FIG.5

FIG.6

Information processing device ⌐100

Control device ⌐101

ROM ⌐102

RAM ⌐103

Communication interface ⌐104

⌐115

Auxiliary storage device ⌐120

Training dataset ──122

Estimation model ──124

Training program ──126

Abnormality detection program ──128

Input interface ⌐107

Display interface ⌐105

Input device ⌐108

Display ⌐106

FIG.7

<u>122</u>

| Image name | Training image |
|------------|----------------|
| 00001 | Filament image A |
| 00002 | Filament image B |
| 00003 | Filament image C |
| 00004 | Filament image D |
| . . . | . . . |

123

123

123

123

FIG.8

FIG.9

FIG.10

FIG.11

FIG.12

FIG.13

FIG.14

FIG.15

60   11

30AX   θ

40AX

30   40

Rear

Left   Right
Up
Front

FIG.16

```
        ┌─────────────────────┐
        │        Start        │
        │ (training processing)│
        └─────────────────────┘
                   │
                   ▼                    ╭S110
        ┌─────────────────────────┐
        │   Execute preprocessing  │
        │ on filament image for training│
        └─────────────────────────┘
                   │
                   ▼                    ╭S112
        ┌─────────────────────────┐
        │ Input preprocessed filament image│
        │      to autoencoder      │
        └─────────────────────────┘
                   │
                   ▼                    ╭S114
        ┌─────────────────────────┐
        │ Update parameters of autoencoder│
        │ based on output value of autoencoder│
        └─────────────────────────┘
                   │
                   ▼                    ╭S120
        ╱─────────────────────────╲
   NO  ⟨  Terminate training processing? ⟩
        ╲─────────────────────────╱
                   │ YES
                   ▼
        ┌─────────────────────┐
        │         End         │
        │ (training processing)│
        └─────────────────────┘
```

FIG.17

```
        ┌─────────────────────────────────┐
        │             Start               │
        │  (abnormality detection processing) │
        └─────────────────────────────────┘
                        │
                        ▼              ⌐S210
        ┌─────────────────────────────────┐
        │        Acuire filament image    │
        │      for estimation from camera │
        └─────────────────────────────────┘
                        │
                        ▼              ⌐S212
        ┌─────────────────────────────────┐
        │  Execute predetermined preprocessing │
        │          on filament image      │
        └─────────────────────────────────┘
                        │
                        ▼              ⌐S214
        ┌─────────────────────────────────┐
        │   Input preprocessed filament image │
        │           to autoencoder        │
        └─────────────────────────────────┘
                        │
                        ▼              ⌐S216
        ┌─────────────────────────────────┐
        │  Calculate degree of similarity between │
        │ filament image and restored filament image │
        └─────────────────────────────────┘
                        │
                        ▼              ⌐S230
             ╱─────────────────────────╲       NO
            ╱ Does calculated degree of similarity ╲──────────┐
            ╲  satisfy abnormality conditions?    ╱           │
             ╲─────────────────────────╱                     │
                   │ YES                                      │
                   ▼            ⌐S232                          ▼         ⌐S234
        ┌──────────────────────┐              ┌──────────────────────┐
        │ Output determination result │       │ Output determination result │
        │  indicating abnormality │           │   indicating normality  │
        └──────────────────────┘              └──────────────────────┘
                   │                                      │
                   ▼◄─────────────────────────────────────┘
        ┌─────────────────────────────────┐
        │              End                │
        │  (abnormality detection processing) │
        └─────────────────────────────────┘
```

FIG.18

FIG.19

122

| Image name | Training image | Label |
|---|---|---|
| 00001 | Filament image A | Yarn path abnormality |
| 00002 | Filament image B | Yarn path abnormality |
| 00003 | Filament image C | Yarn path abnormality |
| 00004 | Filament image D | Normality |
| . . . | . . . | . . . |

123

123

123

123

FIG.20

FIG.21

EP 4 588 873 A1

Europäisches
Patentamt
European
Patent Office
Office européen
des brevets

# EUROPEAN SEARCH REPORT

**Application Number**

EP 24 22 3695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 184 659 A (WUJIANG LANGKE CHEMICAL FIBER CO LTD) 30 August 2019 (2019-08-30) * the whole document * | 1-15 | INV. B65H63/032 B65H63/04 D01D5/096 G06T7/00 |
| Y | Anonymous: "Autoencoder - Wikipedia", , 28 December 2023 (2023-12-28), XP093283011, Retrieved from the Internet: URL:https://en.wikipedia.org/w/index.php?title=Autoencoder&oldid=1192294199 [retrieved on 2025-06-02] * page 9 * | 1-15 | |
| A,P | EP 4 425 426 A1 (TMT MACHINERY INC [JP]) 4 September 2024 (2024-09-04) * paragraphs [0006], [0009], [0013], [0014], [0018], [0020], [0022], [0037], [0055] - [0058], [0074], [0177]; figures * | 1,4,6,13 | |
| A | WO 2020/113694 A1 (SHENZHEN MALONG TECH CO LTD [CN]) 11 June 2020 (2020-06-11) * the whole document * | 1-15 | TECHNICAL FIELDS SEARCHED (IPC) B65H D01D G06T |
| A | CN 116 342 468 A (JIANGSU DANMAO TEXTILES CO LTD) 27 June 2023 (2023-06-27) * the whole document * | 1-15 | |
| A | CN 109 672 702 A (FAR EASTERN FIBERTECH CO LTD) 23 April 2019 (2019-04-23) * the whole document * | 1-15 | |
| A | JP 2023 128942 A (ASAHI KASEI CORP) 14 September 2023 (2023-09-14) * paragraph [0113]; figures * | 1-15 | |

The present search report has been drawn up for all claims

| Place of search | Date of completion of the search | Examiner |
|---|---|---|
| The Hague | 3 June 2025 | Lemmen, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3695

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | | Publication date | Patent family member(s) | | Publication date |
|---|---|---|---|---|---|
| CN 110184659 | A | 30-08-2019 | NONE | | |
| EP 4425426 | A1 | 04-09-2024 | CN | 118587707 A | 03-09-2024 |
| | | | EP | 4425426 A1 | 04-09-2024 |
| | | | JP | 2024125173 A | 13-09-2024 |
| | | | KR | 20240135356 A | 10-09-2024 |
| | | | TW | 202436723 A | 16-09-2024 |
| WO 2020113694 | A1 | 11-06-2020 | CN | 109544549 A | 29-03-2019 |
| | | | WO | 2020113694 A1 | 11-06-2020 |
| CN 116342468 | A | 27-06-2023 | NONE | | |
| CN 109672702 | A | 23-04-2019 | NONE | | |
| JP 2023128942 | A | 14-09-2023 | NONE | | |

EPO FORM P0459

For more details about this annex : see Official Journal of the European Patent Office, No. 12/82

**EP 4 588 873 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023128942 A